# EUROPÄISCHE PATENTSCHRIFT

(11) **EP 2 595 876 B1**
(45) Veröffentlichungstag und Bekanntmachung des Hinweises auf die Patenterteilung: **06.07.2016**
(21) Anmeldenummer: 11741106.6
(22) Anmeldetag: 20.07.2011
(51) Int. Cl.: B64C 1/12, B64C 3/26, B32B 3/08

(54) **HAUPTLAST-TRAGENDE BEPLANKUNGSSCHALE SOWIE STRUKTURBAUTEIL MIT ZUMINDEST EINER HAUPTLAST-TRAGENDEN BEPLANKUNGSSCHALE**
LINING SHELL CARRYING A MAIN LOAD AND STRUCTURAL COMPONENT HAVING AT LEAST ONE LINING SHELL CARRYING A MAIN LOAD
PANNEAU DE REVÊTEMENT SUPPORTANT LA CHARGE PRINCIPALE ET ÉLÉMENT DE STRUCTURE COMPORTANT AU MOINS UN PANNEAU DE REVÊTEMENT SUPPORTANT LA CHARGE PRINCIPALE

(30) Priorität: 20.07.2010 US 365863 P; 20.07.2010 US 365873 P; 20.07.2010 US 365882 P; 20.07.2010 US 365857 P; 20.07.2010 DE 102010031690; 20.07.2010 DE 102010031688; 20.07.2010 DE 102010027695; 20.07.2010 DE 102010027696
(43) Veröffentlichungstag der Anmeldung: 29.05.2013
(73) Patentinhaber: Airbus Operations GmbH, 21129 Hamburg (DE)
(72) Erfinder: ZUARDY, Ichwan, 21073 HAMBURG (DE); ZAHLEN, Pierre, 21680 STADE (DE); HERRMANN, Axel, Siegfried, 21684 STADE (DE)
(74) Vertreter: Uexküll & Stolberg
(86) Internationale Anmeldenummer: PCT/EP2011/003641
(87) Internationale Veröffentlichungsnummer: WO 2012/010304

(56) Entgegenhaltungen:
- CN-Y- 201 254 685
- US-A- 3 837 985
- US-A- 5 869 165
- US-A- 5 958 550
- US-B1- 6 291 049

## Beschreibung

Die Erfindung betrifft eine hauptlast-tragende Beplankungsschale sowie ein Strukturbauteil mit zumindest einer hauptlast-tragende Beplankungsschale und einer Trägerstruktur zur Befestigung der hauptlast-tragenden Beplankungsschale.

Aus der US 6,291,049 ist eine Beplankungsplatte in einer Sandwichbauweise bekannt, in die pinförmige Verstärkungselemente zur Stabilisierung der Beplankungsplatte eingefügt sind. Dokument US5958550, welches alle Merkmale des Oberbegriffs das Anspruchs 1 offenbart, wird der als nächstliegender Stand der Technik angesehen.

Aufgabe der Erfindung ist, eine hauptlast-tragende Beplankungsschale bereitzustellen, die in verbesserter Weise schadenstolerant gebildet und als schadenstoleranter Bestandteil eines Strukturbauteils verwendet werden kann.

Aufgabe der Erfindung ist weiterhin, ein Strukturbauteil mit zumindest einer hauptlast-tragenden Beplankungsschale und einer Trägerstruktur zur Befestigung der hauptlast-tragenden Beplankungsschale bereitzustellen, das schadenstolerant gestaltet ist.

Diese Aufgaben werden mit den Merkmalen des unabhängigen Patentanspruches 1 gelöst. Weitere Ausführungsformen sind in den auf diese rückbezogenen Unteransprüchen angegeben.

Durch die erfindungsgemäßen Lösungen wird insbesondere eine Eingrenzung eventuell auftretender oder vorhandener oder entstehender Schäden in der erfindungsgemäßen Beplankungsschale erreicht. Verschiedene Ausführungsformen der erfindungsgemäßen Beplankungsschale sind derart gestaltet, dass gegebenenfalls auftretende Schäden an derselben über einen lokal definierten Bereich eingegrenzt werden. Dies kann nach der Erfindung durch einen Kernschicht-Verstärkungsbereich nach der Erfindung und vorzugsweise eine Mehrzahl von Kernschicht-Verstärkungsbereichen nach der Erfindung erreicht werden, die in geeigneter Weise angeordnet sind, um von Verstärkungsbereichen getrennte Beplankungsschalen-Abschnitte zu definieren, so dass Abschnitte der Kernschicht jeweils zwischen Verstärkungsbereichen gelegen sind. Insbesondere kann eine Mehrzahl von Verstärkungsbereichen umlaufend angeordnet sein, so dass diese Verstärkungsbereiche jeweils einen Kernschicht-Abschnitt umschließen. Alternativ oder zusätzlich kann vorgesehen sein, dass Verstärkungsteile nach erfindungsgemäßen Ausführungsformen und in erfindungsgemäßer Weise in die Beplankungsschale eingebracht sind. Diese Verstärkungssteile können derart angeordnet sein, dass diese eine Reihe oder Abfolge von Verstärkungsteilen bilden, deren Verlauf wie ein erfindungsgemäßer Verlauf der Verstärkungsbereiche vorgesehen sein kann.

Erfindungsgemäß ist eine hauptlast-tragende Beplankungsschale für ein Strukturbauteil eines Strömungskörpers vorgesehen. Die Beplankungsschale ist als Sandwich und aus einem inneren Hautabschnitt, einem äußeren Hautabschnitt sowie eine zwischen diesen gelegenen schublastaufnehmende Kernschicht gebildet, die den inneren und den äußeren Hautabschnitt flächig miteinander verbindet. Erfindungsgemäß kann die Beplankungsschale zur Beeinflussung von Schubspannungen in der Kernschicht eine Mehrzahl Verstärkungsteilen und/oder von Verstärkungs-Vorrichtungen aufweisen. Die Verstärkungs-Vorrichtungen weisen Verstärkungsteile auf, die nach einem Aspekt der Erfindung jeweils zumindest 85 % der schublast-aufnehmenden Kernschicht in deren Dickenrichtung durchragen, um die Rissfestigkeit der Beplankungsschale zu verbessern. Die Verstärkungsvorrichtungen sind nach einer Ausführungsform der Erfindung jeweils aus einer Kombination von zumindest zwei in einem zusammenhängenden Volumenteil der Beplankungsschale angeordneten Verstärkungsteilen gebildet sind, wobei die Verstärkungs-Vorrichtungen in einer Referenz-Längsrichtung eines Zwischenbereichs hintereinander angeordnet sein können. Die Verstärkungsteile und/oder Verstärkungs-Vorrichtungen können gruppenweise in jeweils einem von mehreren Volumenteilen der Beplankungsschale angeordnet sein, wobei jede Gruppe eines Volumenteils jeweils aus einer Kombination von zumindest zwei Verstärkungsteilen gebildet ist. Weiterhin können die Verstärkungsteile einer Verstärkungsvorrichtung in jeweils einem zusammenhängenden fiktiven Volumenteil der Beplankungsschale angeordnet sein. Bei der Kombination der Verstärkungsteile kann insbesondere vorgesehen sein, dass diese jeweils mit einer Abweichung von maximal 30 Grad und in der bevorzugten Ausführungsform von 10 Grad dieselbe Orientierung in Bezug auf die Dickenrichtung der Beplankungsschale haben. Weiterhin können die Ausrichtungen der Verstärkungsteile in Bezug auf die weiteren Koordinatenrichtungen der Beplankungsschale zyklisch vorgesehen sein.

Bei den erfindungsgemäßen Ausführungsformen, bei denen Verstärkungsteile vorgesehen sind, kann grundsätzlich vorgesehen sein, dass die oder ein Teil der Verstärkungsteile in der Beplankungsschale in jeweils in einem Volumenteil der Beplankungsschale gelegenen Gruppen von Verstärkungs-Vorrichtungen angeordnet sind, wobei die Volumenteile entlang einer Referenz-Längsrichtung oder der Rippen-Längsrichtung hintereinander angeordnet sind, wobei jede Gruppe eines Volumenteils jeweils aus einer Kombination von zumindest zwei Verstärkungsteilen gebildet ist, deren Ausrichtungen jeweils maximal 30 Grad von der Dickenrichtung der Beplankungsschale abweichen und die in regelmäßiger oder unregelmäßiger Weise um eine Mittelachse des Volumenteils herum angeordnet sind. Das Volumenteil ist ein zur Veranschaulichung der Anordnung von Verstärkungsteilen gewähltes fiktives Volumenteil der Beplankungsschale, das sich über die gesamte Dicke derselben erstreckt und insbesondere als Quader geformt ist. In diesem Fall kann insbesondere die Mittelachse des Volumenteils die in der Dickenrichtung der Beplankungsschale verlaufende und die Querschnittsflächen-Schwerpunkte des Quaders verbindende Mittelachse oder Symmetrieachse sein.

Unter "Beplankungsschale" wird hierin generell ein Schalenteil verstanden, das erfindungsgemäß als Sandwichschale ausgeführt ist, und gekrümmt oder nicht gekrümmt sein kann.

Dabei kann die Ausrichtung der Verstärkungsteile insbesondere innerhalb eines Bereichs zwischen 45 Grad und 10 Grad vorgesehen sein, wobei diese Winkelbeträge durch die Größe des Winkels zwischen der Längsrichtung des jeweiligen Verstärkungsteils und der Dickenrichtung der Beplankungsschale an dieser Stelle definiert ist.

Nach einer Ausführungsform der Erfindung kann vorgesehen sein, dass zumindest ein Teil der Verstärkungsteile und/oder Verstärkungs-Vorrichtungen derart angeordnet ist, dass deren Enden den inneren Hautabschnitt und/oder den äußeren Hautabschnitt jeweils zumindest teilweise durchragen.

Nach einer weiteren Ausführungsform kann vorgesehen sein, dass der innere Hautabschnitt und/oder der äußere Hautabschnitt der Beplankungsschale jeweils aus mehreren Hautlagen gebildet ist. Dabei kann vorgesehen sein, dass zumindest ein Teil der Verstärkungsteile und/oder Verstärkungsvorrichtungen einige der Hautlagen und insbesondere nicht sämtliche der Hautlagen durchragen.

Nach einem Ausführungsbeispiel ist vorgesehen, dass die Verstärkungs-Vorrichtungen in einer Referenz-Längsrichtung gesehen hintereinander angeordnet sind. Die Anordnung von Verstärkungs-Vorrichtungen kann dabei insbesondere in einem länglichen Verstärkungsbereich gelegen sein, der sich mit seiner Längsrichtung entlang eines Kernschicht-Endbereichs oder entlang eines zum Befestigen einer Rippenanordnung oder eines Trägerteils vorgesehenen Anschlussbereichs erstreckt, wobei die Breite des Verstärkungsbereichs maximal die zehnfache Dicke der Beplankungsschale in diesem Bereich betragen kann.

In der Beplankungsschale können mehrere Reihen von Verstärkungsteilen hintereinander in der Referenz-Längsrichtung angeordnet sein, wobei die Reihen von Verstärkungsteilen derart angeordnet sind, dass sich deren Verstärkungsteile in Richtung der Referenz-Längserstreckung der Beplankungsschale gesehen ineinander kämmen.

Nach einer weiteren Ausführungsform der Erfindung kann eine Verstärkungsvorrichtung jeweils aus einem Paar von Verstärkungsteilen gebildet sein, wobei die Verstärkungsteile jedes Paares von Verstärkungsteilen derart zueinander orientiert sind, dass die Verstärkungsteile zueinander eine in einer Längserstreckung der Beplankungsschale gesehen paarweise X-förmige Verstärkungsvorrichtung bilden.

Die Verstärkungsteile zumindest teilweise pinförmig und/oder zumindest an einem Ende nadelförmig gestaltet sein. Alternativ oder zusätzlich können Verstärkungsteile plattenförmig gestaltet sein. Weiterhin kann zumindest ein Ende von Verstärkungsteilen jeweils mit einer fußartigen Verbreiterung versehen sind. Dabei können die plattenförmigen Verstärkungsteile und/oder Verstärkungsvorrichtungen einer Verstärkungs-Vorrichtung ineinander greifend angeordnet sein.

Gemäß Anspruch 1 ist die schublastaufnehmende Kernschicht aus mehreren in der Längserstreckung der Schaumschicht nebeneinander angeordneten Kernschicht-Abschnitten gebildet, die jeweils an den einander anliegenden Seiten durch einen Kernschicht-Verstärkungsbereich miteinander verbunden sind, der sich quer zur Längserstreckung der Kernschicht durch diese hindurch erstreckt, wobei der Verstärkungsbereich aus einem Material gebildet ist, das eine mindestens zweifache Steifigkeit aufweist als die schublast-aufnehmende Kernschicht. Dabei ist die schublast-aufnehmende Kernschicht aus plattenförmigen Kernschicht-Abschnitten gebildet und verläuft der Verstärkungsbereich zwischen den Kernschicht-Abschnitten zur Verbindung derselben. Der Kernschicht-Verstärkungsbereich kann insbesondere aus Harz gebildet sein.

Gemäß Anspruch 1 ist vorgesehen, dass mehrere Verstärkungsteile den Verstärkungsbereich jeweils zumindest teilweise durchragen.

Dabei kann auch vorgesehen sein, dass Verstärkungsteile mit einem Ende in den Verstärkungsbereich eingesetzt sind und sich mit ihrem übrigen Bereich in der schublast-aufnehmenden Kernschicht erstrecken.

Weiterhin kann vorgesehen sein, dass entlang eines Umgebungsbereichs einer Mehrzahl von Kernschicht-Verstärkungsbereichen in der schublastaufnehmenden Kernschicht der Beplankungsschale Verstärkungs-Vorrichtungen integriert sind. Der Umgebungsbereich für die Anordnung der Verstärkungs-Vorrichtungen kann sich auf beiden Seiten des Kernschicht-Verstärkungsbereichs bis zu einer Entfernung von maximal der zehnfachen und in einer bevorzugten Ausführungsform maximal der doppelten Dicke der Beplankungsschale an der jeweiligen Stelle des Kernschicht-Verstärkungsbereichs erstrecken.

Nach eienr erfindungsgemäßen Ausführungsform kann vorgesehen sein, dass mehrere Reihen von Verstärkungsteilen hintereinander in der Längsrichtung entlang eines Umgebungsbereichs zumindest eines Kernschicht-Verstärkungsbereichs angeordnet sind, wobei die Reihen von Verstärkungsteilen derart angeordnet sind, dass sich deren Verstärkungsteile in Richtung der Längserstreckung des äußeren Randabschnitts der Beplankungsschale gesehen ineinander kämmen.

Nach einem weiteren Aspekt der Erfindung ist ein Strukturbauteil mit zumindest einer hauptlast-tragenden oder haupt-tragenden Beplankungsschale und einer Trägerstruktur zur Befestigung der Beplankungsschale vorgesehen. Die Beplankungsschale ist als Sandwich und aus einem inneren Hautabschnitt, einem äußeren Hautabschnitt sowie einer zwischen diesen gelegenen schublastaufnehmenden Kernschicht gebildet; die den inneren und den äußeren Hautabschnitt flächig miteinander verbindet. Die Trägerstruktur ist aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet. Die Rippen-Anordnung weist dabei auf: eine von der Beplankungsschale in seiner Querrichtung abstehende Rippe und ein daran anschließendes Flanschteil, das entlang der Rippenanordnungs-Längsrichtung flächig mit der Beplankungsschale verbunden ist. Erfindungsgemäß sind in der Beplankungsschale entlang eines quer zur Rippenanordnungs-Längsrichtung verlaufenden Beplankungsschalen-Abschnitts Verstärkungsprofile angeordnet, die das Flanschteil und den äußeren Hautabschnitt zur Stabilisierung der Beplankungsschale bei Beschädigung derselben von außen miteinander verbinden. Insbesondere ist vorgesehen, dass das Anschlussteil zur Abstützung der Beplankungsschale an der Trägerstruktur in der Dickenrichtung der Beplankungsschale gesehen außerhalb der Beplankungsschale gelegen und flächig an dem inneren Hautabschnitt anliegend an diesem befestigt ist. Dabei ist insbesondere vorgesehen, dass der wenigstens eine Profilträger in der Draufsicht auf die flächige Erstreckung der Beplankungsschale gesehen innerhalb des Anschlussbereichs angeordnet ist. Weiterhin sind an zwei Zwischenbereichen oder Verstärkungsbereichen, die in Rippenanordnungs-Längsrichtung und entlang der seitlichen Enden des Beplankungsschalen-Abschnitts verlaufen, Verstärkungs-Vorrichtungen integriert sind. Diese sind insbesondere mit die Kernschicht durchragenden Verstärkungsteilen ausgeführt, wobei die Verstärkungsteile und/oder Verstärkungsvorrichtungen zumindest abschnittsweise entlang der Rippenanordnungs-Längsrichtung, d.h. in der Rippenanordnungs-Längsrichtung hintereinander liegend angeordnet sind.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein, so dass das Anschlussteil aufgrund der flächig durch die Klebeverbindung bereitgestellten Klebekraft an der Beplankungsschale gehalten wird. Zusätzlich oder alternativ dazu kann das Anschlussteil mit der Beplankungsschale mit dem inneren Hautabschnitt mittels Verbindungselementen wie insbesondere Nieten (Blindniete, Passniete, etc.) verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass im Anschlussbereich des plattenförmigen Anschlussteils entlang der Referenz-Längsrichtung eine Mehrzahl von Verstärkungsteilen integriert ist.

Nach einer Ausführungsform des erfindungsgemäßen Strukturbauteils ist vorgesehen, dass zumindest einige der Verstärkungs-Teile derart in der Kernschicht angeordnet ist, dass deren Enden den inneren Hautabschnitt und/oder den äußeren Hautabschnitt jeweils zumindest teilweise durchragen, wobei insbesondere der innere Hautabschnitt und der äußere Hautabschnitt jeweils aus mehreren Lagen gebildet ist und wenigstens ein Teil der Verstärkungsteile zumindest eine erste Lage durchdringen.

Nach einem weiteren Aspekt der Erfindung ist ein Strukturbauteil mit zumindest einer hauptlast-tragenden Beplankungsschale und einer Trägerstruktur zur Befestigung der Beplankungsschale vorgesehen, wobei die Beplankungsschale als Sandwich und aus einem inneren Hautabschnitt, einem äußeren Hautabschnitt sowie einer zwischen diesen gelegenen schublast-aufnehmenden Kernschicht gebildet ist, die den inneren und den äußeren Hautabschnitt flächig miteinander verbindet, wobei die Trägerstruktur aus zumindest einem zwischen und quer zu diesen verlaufenden und entlang einer Referenz-Längsrichtung mit der Beplankungsschale verbundenen plattenförmigen Anschlussteil gebildet ist, das zur Abstützung der Beplankungsschale an der Trägerstruktur außerhalb der Trägerstruktur gelegen und flächig an dem inneren Hautabschnitt anliegend an diesem befestigt ist. Dabei ist im Anschlussbereich des plattenförmigen Anschlussteils entlang der Referenz-Längsrichtung eine Mehrzahl von Verstärkungsteilen integriert. Auch sind wenigstens einige der Verstärkungs-Teile derart in der Kernschicht angeordnet, dass deren Enden den inneren Hautabschnitt und/oder den äußeren Hautabschnitt jeweils zumindest teilweise durchragen.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein. Zusätzlich oder alternativ dazu kann das Anschlussteil mit der Beplankungsschale mit dem inneren Hautabschnitt mittels Verbindungselementen wie insbesondere Nieten verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass der innere Hautabschnitt und der äußere Hautabschnitt jeweils aus mehreren Lagen gebildet ist, wobei die Verstärkungs-Teile zumindest eine erste Lage des inneren Hautabschnitts und des äußeren Hautabschnitts durchdringen.

Nach einer Ausführungsform des erfindungsgemäßen Strukturbauteils ist vorgesehen, dass in der Beplankungsschale zumindest ein entlang der Referenz-Längsrichtung verlaufender Profilträger zur Ausbildung eines Verstärkungs-Abschnitts im Anschlussbereich des plattenförmigen Anschlussteils angeordnet ist, der mit dem inneren Hautabschnitt und dem äußeren Hautabschnitt zur Stabilisierung der Beplankungsschale bei Beschädigung derselben verbunden ist und dadurch von außen gegenseitig abstützt.

Bei den erfindungsgemäßen Ausführungsformen, bei denen Verstärkungsteile vorgesehen sind, kann grundsätzlich vorgesehen sein, dass die oder ein Teil der Verstärkungsteile in der Beplankungsschale in jeweils in einem Volumenteil der Beplankungsschale gelegenen Gruppen von Verstärkungsteilen als Verstärkungs-Vorrichtungen angeordnet sind, wobei die Volumenteile entlang einer Referenz-Längsrichtung oder der Rippen-Längsrichtung hintereinander angeordnet sind, wobei jede Gruppe eines Volumenteils jeweils aus einer Kombination von zumindest zwei Verstärkungsteilen gebildet ist, deren Ausrichtungen jeweils maximal 30 Grad von der Dickenrichtung der Beplankungsschale abweichen und die in regelmäßiger oder unregelmäßiger Weise um eine Mittelachse des Volumenteils herum angeordnet sind. Das Volumenteil ist ein zur Veranschaulichung der Anordnung von Verstärkungsteilen gewähltes fiktives Volumenteil der Beplankungsschale, das sich über die gesamte Dicke derselben erstreckt und insbesondere als Quader geformt ist. In diesem Fall kann insbesondere die Mittelachse des Volumenteils die in der Dickenrichtung der Beplankungsschale verlaufende und die Querschnittsflächen-Schwerpunkte des Quaders verbindende Mittelachse oder Symmetrieachse sein.

Nach einem Ausführungsbeispiel kann die Beplankungsschale zur Beeinflussung von Schubspannungen in der Kernschicht eine Mehrzahl von in den Zwischenbereichen angeordneten Verstärkungsteile und/oder Verstärkungsvorrichtungen aufweisen, die jeweils aus einer Kombination von zumindest zwei in einem zusammenhängenden Volumenteil der Beplankungsschale angeordneten Verstärkungsteilen gebildet sind. Dabei sind die Verstärkungsteile und/oder Verstärkungsvorrichtungen in der Längsrichtung des Zwischenbereichs hintereinander angeordnet. Bei der Kombination der Verstärkungsteile haben diese jeweils mit einer Abweichung von maximal 10 Grad dieselbe Orientierung in Bezug auf die Dickenrichtung der Beplankungsschale und sind die Ausrichtungen der Verstärkungsteile in Bezug auf die weiteren Koordinatenrichtungen der Beplankungsschale zyklisch vorgesehen.

Dabei kann insbesondere vorgesehen sein, dass die Ausrichtung der Verstärkungsteile innerhalb eines Bereichs zwischen 45 Grad und 10 Grad vorgesehen ist, wobei diese Winkelbeträge durch die Größe des Winkels zwischen der Längsrichtung des jeweiligen Verstärkungsteils und der Dickenrichtung der Beplankungsschale an dieser Stelle definiert ist. Die Verstärkungs-Vorrichtungen können in der Rippenanordnungs-Längsrichtung hintereinander angeordnet sein und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungsteile können zumindest teilweise pinförmig gestaltet sein. Auch kann vorgesehen sein, dass als Verstärkungs-Vorrichtungen zumindest teilweise plattenförmige und sich jeweils in der Rippenanordnungs-Längsrichtung erstreckende Verstärkungsteile verwendet werden. Dabei kann weiterhin vorgesehen sein, dass von den Verstärkungs-Vorrichtungen zumindest jeweils zwei X-förmig angeordnete plattenförmige Verstärkungsteile in der Rippenanordnungs-Längsrichtung gesehen ineinander greifend angeordnet sind.

Die schublastaufnehmende Kernschicht kann einen Kernschicht-Verstärkungsbereich aufweisen, der in zumindest einem der zwei Zwischen- oder Seitenbereiche und in Rippenanordnungs-Längsrichtung verläuft und sich quer zur Längserstreckung der schublastaufnehmenden Kernschicht durch diese hindurch erstreckt, wobei der Verstärkungsbereich aus einem Material gebildet ist, das eine mindestens zweifache Steifigkeit aufweist als die schublastaufnehmende Kernschicht. Der Kernschicht-Verstärkungsbereich kann insbesondere aus Harz und z. B. aus Epoxydharz gebildet sein. Das Strukturbauteil kann derart gestaltet sein, dass mehrere der Verstärkungsteile den Kernschicht-Verstärkungsbereich jeweils durchragen.

Nach der Erfindung ist auch ein Strömungskörper mit einem Strukturbauteil vorgesehen, wobei das Strukturbauteil als hauptlast-tragendes Strukturteil und nach einem der voranstehend genannten Ausführungsformen ausgebildet ist.

Nach einem weiteren Aspekt der Erfindung ist eine Hauptlast-tragende Beplankungsschale für ein Strukturbauteil eines Strömungskörpers vorgesehen, wobei die Beplankungsschale als Sandwich und aus einem inneren Hautabschnitt, einem äußeren Hautabschnitt sowie eine zwischen diesen gelegenen schublastaufnehmende Kernschicht gebildet ist, die den inneren und den äußeren Hautabschnitt flächig miteinander verbindet, wobei die schublast-aufnehmende Kernschicht aus mehreren in der Längserstreckung der Schaumschicht nebeneinander angeordneten Kernschicht-Abschnitten gebildet ist, die jeweils an den einander anliegenden Seiten durch einen Kernschicht-Verstärkungsbereich miteinander verbunden sind, der sich quer zur Längserstreckung der Kernschicht durch diese hindurch erstreckt. Dabei kann der Kernschicht-Verstärkungsbereich aus Harz gebildet sein.

Nach einem weiteren Ausführungsbeispiel ist vorgesehen, dass entlang eines Umgebungsbereichs des Kernschicht-Verstärkungsbereichs eine Mehrzahl von Kernschicht-Verstärkungsbereichen in der schublast-aufnehmenden Kernschicht der Beplankungsschale Verstärkungs-Vorrichtungen integriert sind. Dabei kann sich der Umgebungsbereich für die Anordnung der Verstärkungs-Vorrichtungen auf beiden Seiten des Kernschicht-Verstärkungsbereichs bis zu einer Entfernung von maximal der doppelten Dicke der Beplankungsschale an der jeweiligen Stelle des Kernschicht-Verstärkungsbereichs erstrecken.

Dabei kann insbesondere vorgesehen sein, dass die Verstärkungs-Vorrichtungen in der Längsrichtung des Kernschicht-Verstärkungsbereichs hintereinander angeordnet sind und jeweils aus einer Kombination von zumindest zwei in einem zusammenhängenden Volumenteil der Beplankungsschale angeordneten Verstärkungsteilen gebildet sind, wobei bei der Kombination der Verstärkungsteile diese jeweils mit einer Abweichung von maximal 10 Grad dieselbe Orientierung in Bezug auf die Dickenrichtung der Beplankungsschale haben und wobei die Ausrichtungen der Verstärkungsteile in Bezug auf die weiteren Koordinatenrichtungen der Beplankungsschale zyklisch vorgesehen sind. Dabei kann weiterhin die Ausrichtung der Verstärkungsteile innerhalb eines Bereichs zwischen 45 Grad und 10 Grad vorgesehen sein, wobei diese Winkelbeträge durch die Größe des Winkels zwischen der Längsrichtung des jeweiligen Verstärkungsteils und der Dickenrichtung der Beplankungsschale an dieser Stelle definiert ist.

Die Verstärkungsteile und/oder Verstärkungsvorrichtungen können insbesondere in der Längsrichtung des Kernschicht-Verstärkungsbereichs hintereinander angeordnet und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungsteile und/oder Verstärkungsvorrichtungen können zumindest teilweise pinförmig gestaltet sein. Auch kann vorgesehen sein, dass mehrere der Verstärkungsteile den Verstärkungsbereich jeweils durchragen.

Das nach dem vorgenannten Aspekt der Erfindung vorgesehene Strukturbauteil eines Strömungskörpers mit zumindest einer hauptlast-tragenden Beplankungsschale und einer Trägerstruktur zur Befestigung der Beplankungsschale und der Bildung der Beplankungsschale aus Kernschicht-Abschnitten, die jeweils an den einander anliegenden Seiten durch einen Kernschicht-Verstärkungsbereich miteinander verbunden sind, kann insbesondere in Kombination mit der Verwendung einer Rippen-Anordnung vorgesehen sein, bei der entlang eines quer zur Rippenanordnungs-Längsrichtung verlaufenden Beplankungsschalen-Abschnitts Verstärkungsprofile angeordnet sind. Dabei kann die Anordnung und Ausführung der Verstärkungsprofile nach einer der vorgenannten Ausführungsbeispiele gestaltet sein.

Erfindungsgemäß kann weiterhin ein Strömungskörper mit einem Strukturbauteil vorgesehen sein, wobei das Strukturbauteil als haupt-tragendes Strukturteil und nach einem der vorgenannten Ausführungsbeispiele ausgebildet ist.

Nach der Erfindung ist auch ein Strukturbauteil eines Strömungskörpers mit zumindest einer solchen zuvor beschriebenen hauptlast-tragenden Beplankungsschale und einer Trägerstruktur zur Befestigung der Beplankungsschale vorgesehen. Bei einem solchen Strukturbauteil kann vorgesehen sein, dass die Trägerstruktur aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet ist und insbesondere die in diesem Zusammenhang hierin genannten Merkmale aufweisen kann.

Nach der Erfindung kann auch ein Strömungskörper mit einem Strukturbauteil vorgesehen sein, das als hauptlast-tragendes Strukturbauteil ausgebildet ist und nach einem oder mehreren der vorgenannten Merkmale gebildet ist.

Nach einem weiteren Aspekt der Erfindung ist eine hauptlast-tragende Beplankungsschale für ein Strukturbauteil vorgesehen, die in ihrem sich flächig erstreckenden Innenbereich als Sandwich-Bauteil und aus einem inneren Hautabschnitt, einem äußeren Hautabschnitt sowie einer zwischen diesen gelegenen schublast-aufnehmenden Kernschicht gebildet ist, der den inneren und den äußeren Hautabschnitt flächig miteinander verbindet, wobei die Beplankungsschale zum Anbringen derselben an ein Träger-Bauteil mit einem äußeren Randabschnitt mit einem äußeren Rand ausgebildet ist und der aufweist: einen entlang des Rands verlaufenden kernschichtfreien Anschlussbereich mit dem inneren Hautabschnitt, dem äußeren Hautabschnitt und einer monolithischen Zwischenschicht. In einem Kernschicht-Endbereich entlang des äußeren Randabschnitts der Beplankungsschale sind Verstärkungs-Vorrichtungen integriert, die die schublast-aufnehmende Kernschicht durchragen.

Dabei kann insbesondere vorgesehen sein, dass von dem Innenbereich aus gesehen vor dem kernschichtfreien Anschlussbereich ein Zwischenbereich vorgesehen ist, in dem sich die Dicke der schublast-aufnehmenden Kernschicht in Richtung zu dessen Rand kontinuierlich verringert unter Ausbildung eines keilförmigen Abschnitts der monolithischen Zwischenschicht zumindest zwischen der dem äußeren Hautabschnitt zugewandten Seite der schublast-aufnehmenden Kernschicht und dem äußeren Hautabschnitt oder zwischen der dem inneren Hautabschnitt zugewandten Seite der schublast-aufnehmenden Kernschicht und dem inneren Hautabschnitt.

Erfindungsgemäß kann weiterhin vorgesehen sein, dass in den Kernschicht-Endbereich entlang des äußeren Randabschnitts der Beplankungsschale Verstärkungs-Vorrichtungen integriert sind, die die schublast-aufnehmende Kernschicht verstärken. Dabei können Verstärkungsteile der Verstärkungsteile und/oder Verstärkungs-Vorrichtungen teilweise die beiden keilförmigen Abschnitte der monolithischen Zwischenschicht durchragen. Nach einem Ausführungsbeispiel der Erfindung kann sich der Kernschicht-Endbereich für die Anordnung der Verstärkungsteile und/oder Verstärkungsvorrichtungen von dem Rand des Kernschichtendes aus bis zu einer Entfernung von maximal der vierfachen Dicke der Beplankungsschale am Rand des Kernschichtendes erstrecken.

Nach einem Ausführungsbeispiel kann dabei vorgesehen sein, dass die Verstärkungs-Vorrichtungen in der Strukturbauteil-Längsrichtung hintereinander angeordnet sind, die jeweils aus einer Kombination von zumindest zwei in einem zusammenhängenden Volumenteil der Beplankungsschale angeordneten Verstärkungsteilen gebildet sind, wobei die Verstärkungsteile und/oder Verstärkungs-Vorrichtungen in der Längsrichtung des Zwischenbereichs oder des zu verstärkenden Bereichs gesehen hintereinander angeordnet sind, wobei bei der Kombination der Verstärkungsteile diese jeweils mit einer Abweichung von maximal 10 Grad dieselbe Orientierung in Bezug auf die Dickenrichtung der Beplankungsschale haben und wobei die Ausrichtungen der Verstärkungsteile in Bezug auf die weiteren Koordinatenrichtungen der Beplankungsschale zyklisch vorgesehen sind. Dabei ist die Orientierung der Verstärkungsteile generell innerhalb eines Winkelbereichs zwischen 70 Grad und 0 Grad vorgesehen, wobei diese Winkelbeträge durch die Größe des Winkels zwischen der Längsrichtung des jeweiligen Verstärkungsteils und der Dickenrichtung der Beplankungsschale an dieser Stelle definiert ist.. Für die erfindungsgemäßen Anwendungsfälle ist insbesondere vorgesehen, dass die Längsausrichtungen der Verstärkungsteile in einem Winkelbereich zwischen 45 Grad und 10 Grad gelegen sind. Die weiteren Koordinatenrichtungen sind die beiden in der ebenen Längserstreckung der Beplankungsschale verlaufenden Koordinatenrichtungen, also die Beplankungsschale-Längsrichtung und die Beplankungsschale-Querrichtung. Dabei kann zusätzlich auch zumindest ein weiteres Verstärkungsteil in dem Volumenteil angeordnet sein, das parallel zu einem weiteren Verstärkungsteil in dem Volumenteil ausgerichtet ist. Alternativ oder zusätzlich können generell auch weiter Verstärkungsteile in dem Volumenelement angeordnet sein. Die Verstärkungsteile und/oder Verstärkungs-Vorrichtungen können insbesondere in der Rippenanordnungs-Längsrichtung hintereinander angeordnet und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungsteile können insbesondere zumindest teilweise pinförmig gestaltet sind.

Weiterhin kann generell vorgesehen sein, dass bei den aufeinander folgenden Volumenteilen eine unterschiedliche Anzahl und Form von pinförmigen in den jeweiligen zusammenhängenden Volumenteilen der Beplankungsschale angeordneten Verstärkungsteilen vorgesehen sein können, z. B. in einem ersten Volumenteil zwei Verstärkungsteile, in dem darauf folgenden zweiten Volumenteil vier Verstärkungsteile und in dem darauf folgenden dritten Volumenteil drei Verstärkungsteile. Die Volumenteile sind fiktive Bereiche, deren Grenzen derart definiert sein, das in diesen die jeweilige Anordnung von Verstärkungsteilen angeordnet oder enthalten ist. Die Volumenteile können insbesondere quaderförmig oder würfelförmig definiert sein. Verschiedene Volumenteile einer Abfolge von in der jeweiligen Längsrichtung hintereinander gelegenen Volumenteilen können verschiedene Größen von Volumenteilen haben. Die Volumenteile können sich in der Längsrichtung gesehen auch überlappen, wenn ein Verstärkungsteil eines Volumenteils in das Innere eines jeweils benachbarten anderen Volumenteils eingreift. Die Ausrichtung der Volumenteile ist insbesondere derart vorgesehen, dass eine Mittelachse oder Symmetrieachse der Volumenteile dieselbe Orientierung hat wie die Orientierung der jeweils für die Anordnung der Verstärkungsteile relevanten Längsachse der Beplankungsschale. D.h. bei einer geradlinigen für die Anordnung der Verstärkungsteile relevanten Längsrichtung sind die Volumenteile insbesondere mit derselben Ausrichtung angeordnet, d.h. diese weisen zueinander parallele Mittelachse oder Symmetrieachse auf, wenn die jeweils relevante Längsachse der Beplankungsschale geradlinig verläuft.

Bei der vorgenannten Beplankungsschale kann auch vorgesehen sein, dass die schublast-aufnehmende Kernschicht einen Verstärkungsbereich (aufweist, der in zumindest einem der zwei Seitenbereiche und in Strukturbauteil-Längsrichtung verläuft und sich quer zur Längserstreckung der schublast-aufnehmenden Kernschicht durch diesen hindurch erstreckt, wobei der Verstärkungsbereich aus einem Material gebildet ist, das eine mindestens zweifache Steifigkeit aufweist als die schublast-aufnehmende Kernschicht. Der Verstärkungsbereich kann insbesondere aus Harz gebildet sein. Auch kann vorgesehen sein, dass mehrere Verstärkungsteile den Verstärkungsbereich jeweils durchragen.

Nach der Erfindung kann in dem äußeren Randabschnitt der Beplankungsschale ein Übergangsbereich vorgesehen sein, in dem sich die Dicke der monolithischen Zwischenschicht in Richtung zum äußeren Rand zur Verringerung der Querschnittsdicke der Beplankungsschale verringert. Insbesondere in dem Übergangsbereich können Verstärkungsvorrichtungen nach der Erfindung angeordnet sein.

Nach der Erfindung ist auch ein Strukturbauteil eines Strömungskörpers mit zumindest einer solchen zuvor beschriebenen hauptlast-tragenden Beplankungsschale und einer Trägerstruktur zur Befestigung der Beplankungsschale vorgesehen. Bei einem solchen Strukturbauteil kann vorgesehen sein, dass die Trägerstruktur aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet ist und insbesondere die in diesem Zusammenhang hierin genannten Merkmale aufweisen kann.

Alternativ oder zusätzlich kann auch eine hauptlast-tragende Beplankungsschale für ein Strukturbauteil vorgesehen sein, die in ihrer sich flächig erstreckenden Innenbereich als Sandwich-Bauteil und aus einem inneren Hautabschnitt, einem äußeren Hautabschnitt sowie einer zwischen diesen gelegenen schublastaufnehmenden Kernschicht gebildet ist, der den inneren und den äußeren Hautabschnitt flächig miteinander verbindet, wobei die Beplankungsschale zum Anbringen derselben an ein Träger-Bauteil mit einem äußeren Randabschnitt mit einem äußeren Rand ausgebildet ist und der aufweist: einen entlang des Rands verlaufenden kernschichtfreien Anschlussbereich mit dem inneren Hautabschnitt, dem äußeren Hautabschnitt und einer monolithischen Zwischenschicht, wobei in einem Kernschicht-Endbereich entlang des äußeren Randabschnitts der Beplankungsschale Verstärkungs-Vorrichtungen nach der Erfindung integriert sind, die die schublastaufnehmende Kernschicht durchragen.

Unter dem Begriff "Strömungskörper" wird in diesem Zusammenhang ein Körper verstanden, der von einer Strömung umströmt wird, und somit eine StrömungsOberfläche aufweist, die insbesondere einen Abschnitt der umströmten Außenseite eines Fahrzeugs bildet. Der Strömungskörper kann insbesondere ein von Luft umströmter Körper und somit ein aerodynamischer Körper sein. Ein aerodynamischer Körper in diesem Zusammenhang kann generell Teil eines Fahrzeugs und insbesondere Teil eines Flugzeugs sein. Das Fahrzeug kann auch ein bodengebundenes Fahrzeug sein und dabei kann der aerodynamische Körper ein Spoiler sein. Auch kann die Strömung eine Flüssigkeitsströmung und der Strömungskörper ein Schiffkörper oder ein Teil desselben sein.

Nach einem Ausführungsbeispiel der Erfindung ist die erfindungsgemäße Beplankungsschale ein Abschnitt der Beplankung eines Flugzeugteils oder Flugwerkteils und z. B. Seitenruders eines Leitwerks und insbesondere eines Höhenleitwerks oder eines Seitenleitwerks und dabei einer Höhenleitwerk-Flosse oder einer Seitenleitwerk-Flosse oder eines Höhenleitwerk-Ruders oder eines Seitenleitwerk-Ruders, eines Flügels, einer Steuerklappe oder einer Hochauftriebsklappe, eines Canards oder eines Rumpfs, also generell eines aerodynamischen Körpers sein, insbesondere dessen Kastenträger oder Kastenträgerbereich (auch *"box structure" genannt).* Der Kastenträgerbereich eines Flugwerkteils kann insbesondere der in der angenommenen Strömungsrichtung gesehen mittlere Teil des Flugwerkteils sein, der zwischen einem Vorderkantenbereich oder Nasenbereich und einem Hinterkantenbereich des Flugwerkteils gelegen ist. Die lasttragenden Strukturbauteile des Kastenträgerbereich sind aus in der Spannweitenrichtung verlaufenden Längsträgern und zwischen diesen verlaufenden und an diesen befestigten Rippen insbesondere gemäß dem Stand der Technik gebildet. Die Beplankungsschale nach der Erfindung kann an einer Seite oder beiden entgegen gesetzt zueinander gelegenen Seiten der lasttragenden Strukturbauteile befestigt sein, so dass deren Außenseiten jeweils eine Strömungsoberfläche bilden. Die vorbestimmte Maximalkraft der Beplankungsschale nach der Erfindung ist die Kraft oder ergibt sich dabei beispielsweise aus der Kraft aufgrund eines Aufschlagens eines aus einer Höhe von 20 Meter auf die Beplankungsschale heruntergefallen Werkzeugs (Fertigungsschaden), ist die Kraft oder ergibt sich dabei beispielsweise aus der Kraft aufgrund des Aufschlagens eines fahrenden Wartungsfahrzeugs (Wartungsschaden) auf die Beplankungsschale oder ein Strukturbautil mit einer solchen Beplankungsschale oder ist die Kraft oder ergibt sich dabei beispielsweise aus der Kraft aufgrund des Aufschlagens eines Körpers mit einem maximalen Gewicht bei einer angenommenen Geschwindigkeit des Flugzeugs und somit Strömungsgeschwindigkeit ("Betriebsschaden"). Für die erfindungsgemäß vorgesehene Beplankungsschale wird dabei eine Beschädigung zugelassen, die noch die Lufttüchtigkeit (*airworthiness*) des Luftfahrzeuges gewährleistet.

Erfindungsgemäß ist ein Strukturbauteil eines Strömungskörpers mit einer Beplankungsschale sowie eine Beplankungsschale eines Strömungskörpers vorgesehen, wobei die Beplankungsschale derart im Strukturbauteil integriert ist, dass diese eine Strömungsoberfläche ausgebildet und zugleich ein hauptlast-tragender Bestandteil des Strömungskörpers ist.

Erfindungsgemäß ist ein Strukturbauteil oder ist eine Beplankungsschale eines Strukturbauteils des Strömungskörpers als hauptlast-tragendes Strukturteil gebildet. Unter dem Begriff "hauptlast-tragend" oder "hauptlast-tragend" wird in diesem Zusammenhang ein Strukturbauteil oder Bestandteil desselben oder eine Beplankungsschale verstanden, das als hinsichtlich seiner Beanspruchung aufgrund äußerer Kräfte im Strömungskörper Hauptlasten aufnimmt und überträgt. Somit sind die hauptlast-tragenden Bestandteile des Strömungskörpers derart auszulegen, dass diese bei dem Auftreten angenommener äußerer Maximalkräfte als tragende Bestandteile erhalten bleiben und in der Lage sein müssen, nach wie vor Mindestlasten zu übertragen. Insofern ist die erfindungsgemäß vorgesehene Beplankungsschale ein "schadenstolerantes" Bauteil oder eine "schadenstolerante" Komponente, da bei dem Auftreten einer vorbestimmten äußeren Maximalkraft die Beschädigung der Beplankungsschale zwar in Kauf genommen wird, jedoch die Beschädigung nicht derart auftreten darf, die einen sogenannten maximal zulässigen Schaden (*al*/*owable damage limit*) übersteigt, wobei der maximal zulässige Schaden des Strömungskörpers derart sein muss, dass die Beplankungsschale noch als Ganzes ihre Strömungsfunktion erfüllen kann. Bei Überschreitung maximal zulässigen Schaden muss eine Reparatur oder ein Ersatz der Beplankungsschale unmittelbar erfolgen.

Die bei den verschiedenen Aspekten der Erfindung und/oder Ausführungsbeispielen und Varianten der Erfindung in der jeweiligen Beplankungsschale vorgesehenen Verstärkungsteilen und/oder Verstärkungsvorrichtungen können generell nach den hierin genannten Ausführungsbeispielen ausgeführt sein. Dabei hängt die jeweilige Richtung oder Längsrichtung, entlang der die Verstärkungsteile und/oder Verstärkungsvorrichtungen in der Beplankungsschale im jeweiligen Anwendungsfall angeordnet sind, von der Orientierung und dem Verlauf des im jeweiligen Anwendungsfall zu verstärkenden Bereichs der Beplankungsschale, in diesem Zusammenhang auch Zwischenbereich oder Verstärkungsbereich genannt, ab.

Als jeweilige Längsrichtung kann insbesondere die Richtung eines Bereichs sein, mit der die Aufnahme von Schubspannungen und somit die Vermeidung von Rissbildungen in der Kernschicht erreicht werden kann. Insbesondere kann als jeweilige Längsrichtung oder der Verlauf, entlang der bzw. dem die Verstärkungsvorrichtungen erfindungsgemäß angeordnet sind, vorgesehen sein: bei der Verbindung oder Befestigung der Beplankungsschale mit einer Rippenordnung die Rippenanordnungs-Längsrichtung, bei der Bildung von Kernschicht-Abschnitten aus Kernschicht-Verstärkungsbereichen die Längsrichtung oder der Längsverlauf der Verstärkungsbereiche oder eines Abschnitts derselben, bei der Bildung der Beplankungsschale mit einem äußeren Randabschnitt mit einem kernschichtfreien Anschlussbereich entlang des Verlaufs der oder entlang der Längsrichtung derselben oder eines Abschnitts derselben. Die erfindungsgemäß vorgesehene Anordnung von Verstärkungsteilen und/oder Verstärkungsvorrichtungen ist also derart ausgeführt, dass die Verstärkungsteile und/oder Verstärkungsvorrichtungen entlang eines länglich ausgebildeten zu verstärkenden Bereichs oder Verstärkungsbereichs des Beplankungsfeldes und in der Längsrichtung desselben hintereinander angeordnet sind, um mit dieser Maßnahme das Weiterleiten von Schubspannungen im Beplankungsfeld zu verhindern. Der Verstärkungsbereich bzw. die Längsrichtung desselben kann geradlinig oder krummlinig verlaufen.

Generell, d.h. bei den verschiedenen Aspekten der Erfindung und/oder Ausführungsbeispielen und Varianten der Erfindung, weist also die Beplankungsschale zur Beeinflussung von Schubspannungen in der Kernschicht eine Mehrzahl von in einem Zwischenbereich der Beplankungsschale, der entlang der flächigen Erstreckung der Beplankungsschale verläuft, angeordnete Verstärkungsteile und/oder Verstärkungs-Vorrichtungen auf. Dabei kann generell, vorgesehen ist, dass die Verstärkungs-Vorrichtungen jeweils aus einer Kombination von zumindest zwei in einem zusammenhängenden Volumenteil der Beplankungsschale angeordneten Verstärkungsteilen gebildet sind, wobei die Verstärkungs-Vorrichtungen in der Längsrichtung des Zwischenbereichs oder des zu verstärkenden Bereichs gesehen hintereinander angeordnet sind und wobei bei der Kombination der Verstärkungsteile diese jeweils mit einer Abweichung von maximal 10 Grad dieselbe Orientierung in Bezug auf die Dickenrichtung der Beplankungsschale haben und wobei die Verstärkungsteile in Bezug auf die weiteren Koordinatenrichtungen der Beplankungsschale zyklisch angeordnet sind. Dabei ist die Orientierung der Verstärkungsteile generell innerhalb eines Winkelbereichs zwischen 70 Grad und 0 Grad vorgesehen, wobei diese Winkelbeträge durch die Größe des Winkels zwischen der Längsrichtung des jeweiligen Verstärkungsteils und der Dickenrichtung der Beplankungsschale an dieser Stelle definiert ist. Für die erfindungsgemäßen Anwendungsfälle ist insbesondere vorgesehen, dass die Längsausrichtungen der Verstärkungsteile in einem Winkelbereich zwischen 45 Grad und 10 Grad gelegen sind. Die weiteren Koordinatenrichtungen sind die beiden in der ebenen Längserstreckung der Beplankungsschale verlaufenden Koordinatenrichtungen, also die Beplankungsschale-Längsrichtung und die Beplankungsschale-Querrichtung.

Dabei kann zusätzlich auch zumindest ein weiteres Verstärkungsteil in dem Volumenteil angeordnet sein, das parallel zu einem weiteren Verstärkungsteil in dem Volumenteil ausgerichtet ist. Alternativ oder zusätzlich können generell auch weiter Verstärkungsteile in dem Volumenelement angeordnet sein.

Weiterhin kann generell vorgesehen sein, dass bei den aufeinander folgenden Volumenteilen eine unterschiedliche Anzahl und Form von pinförmigen in den jeweiligen zusammenhängenden Volumenteilen der Beplankungsschale angeordneten Verstärkungsteilen vorgesehen sein können, z. B. in einem ersten Volumenteil zwei Verstärkungsteile, in dem darauf folgenden zweiten Volumenteil vier Verstärkungsteile und in dem darauf folgenden dritten Volumenteil drei Verstärkungsteile. Die Volumenteile sind fiktive Bereiche, deren Grenzen derart definiert sein, das in diesen die jeweilige Anordnung von Verstärkungsteilen angeordnet oder enthalten ist. Die Volumenteile können insbesondere quaderförmig oder würfelförmig definiert sein. Verschiedene Volumenteile einer Abfolge von in der jeweiligen Längsrichtung hintereinander gelegenen Volumenteilen können verschiedene Größen von Volumenteilen haben. Die Volumenteile können sich in der Längsrichtung gesehen auch überlappen, wenn ein Verstärkungsteil eines Volumenteils in das Innere eines jeweils benachbarten anderen Volumenteils eingreift. Die Ausrichtung der Volumenteile ist insbesondere derart vorgesehen, dass eine Mittelachse oder Symmetrieachse der Volumenteile dieselbe Orientierung hat wie die Orientierung der jeweils für die Anordnung der Verstärkungsteile relevanten Längsachse der Beplankungsschale. D.h. bei einer geradlinigen für die Anordnung der Verstärkungsteile relevanten Längsrichtung sind die Volumenteile insbesondere mit derselben Ausrichtung angeordnet, d.h. diese weisen zueinander parallele Mittelachse oder Symmetrieachse auf, wenn die jeweils relevante Längsachse der Beplankungsschale geradlinig verläuft.

Unter "Dickenrichtung der Beplankungsschale" wird erfindungsgemäß die Richtung der kürzesten Abstandslinie zwischen dem inneren Hautabschnitt und dem äußeren Hautabschnitt an der jeweiligen Stelle der Beplankungsschale verstanden.

Unter "in Bezug auf die weiteren Koordinatenrichtungen der Beplankungsschale zyklische Anordnung" der Verstärkungsteile wird in diesem Zusammenhang verstanden, dass die Ausrichtungen der Verstärkungsteile in Bezug auf die weiteren Koordinatenrichtungen der Beplankungsschale zyklisch vorgesehen sind. Räumlich gesehen bedeutet dies auch, dass die Verstärkungsteile mit der vorgegebenen Orientierung gleichmäßig oder ungleichmäßig entlang eines Zylindermantels verteilt sind, der um die durch z. B. das geometrische Zentrum des Volumenteils verlaufende Dickenkoordinate der Beplankungsschale verläuft. Bei nur zwei Verstärkungsteilen ergibt sich die genannten X-förmige Anordnung derselben.

Unter "Längserstreckung der Beplankungsschale" wird erfindungsgemäß die lokale Orientierung der Mittelebene der Beplankungsschale verstanden, die lokal oder über den gesamten jeweils betrachteten Abschnitt derselben gekrümmt oder ungekrümmt gestaltet sein kann.

Unter "Orientierung der Verstärkungsteile" wird die Richtung der Längsachse der Verstärkungsteile verstanden. Die Längsachse der Verstärkungsteile kann die Symmetrieachse sein und bei einer unsymmetrischen und z. B. gekrümmten Gestaltung der Verstärkungsteile kann die Orientierung der Verstärkungsteile durch die Sehne des in der Längsrichtung vordersten und hintersten Punktes verstanden. Die Längsrichtung ergibt sich aus der größten Länge der Verstärkungsteile.

Unter "Für die Anordnung der Verstärkungsvorrichtungen relevanten Längsachse der Beplankungsschale" wird erfindungsgemäß die Längsrichtung des jeweiligen Zwischenbereichs verstanden.

Nach einem Ausführungsbeispiel für die Gestaltung und Anordnung von Verstärkungs-Vorrichtungen kann vorgesehen sein, dass in zumindest einem Volumenteil oder in sämtlichen Volumenteilen entlang einer jeweils für die Anordnung der Verstärkungsteile relevanten Längsachse der Beplankungsschale jeweils ein Paar von Verstärkungsteilen oder genau zwei Verstärkungsteile angeordnet sind, die derart zueinander orientiert sind, dass diese jeweils in der jeweils für die Anordnung der Verstärkungsteile relevanten Längsachse der Beplankungsschale gesehen X-förmig angeordnet sind.

Unter "Längserstreckung der Beplankungsschale" wird erfindungsgemäß eine Richtung oder eine flächige Erstreckung verstanden, die in der Ebene gelegen ist, die durch die Querrichtung der Beplankungsschale und der Längsrichtung der Beplankungsschale an der jeweiligen Stelle aufgespannt wird.

Die Verstärkungsteile können insbesondere pinförmig oder stabförmig gestaltet sein.

Auch können Verstärkungsteile plattenförmig gebildet sein. Dabei kann insbesondere vorgesehen sein, dass zumindest jeweils zwei in der Längsrichtung des Zwischenbereichs gesehen X-förmig angeordnete plattenförmige Verstärkungsteile ineinander greifend angeordnet sind. Weiterhin kann dabei insbesondere vorgesehen sein, dass sich die plattenförmigen Verstärkungsteile in ihrer Breitenrichtung insbesondere in der Längsrichtung des Zwischenbereichs oder in der jeweils für die Anordnung der Verstärkungsteile und/oder Verstärkungsvorrichtungen relevanten Längsachse der Beplankungsschale erstrecken.

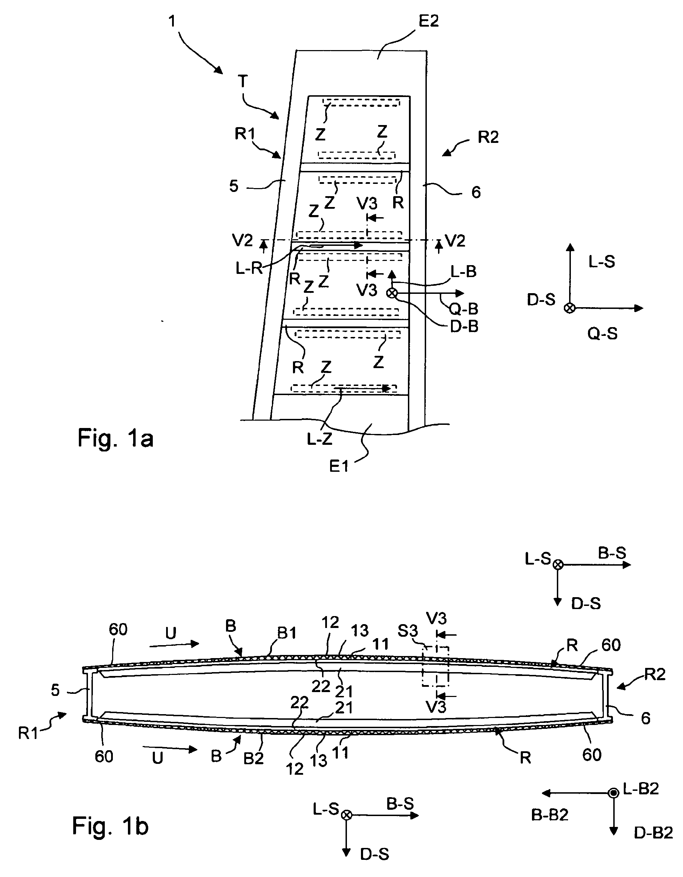

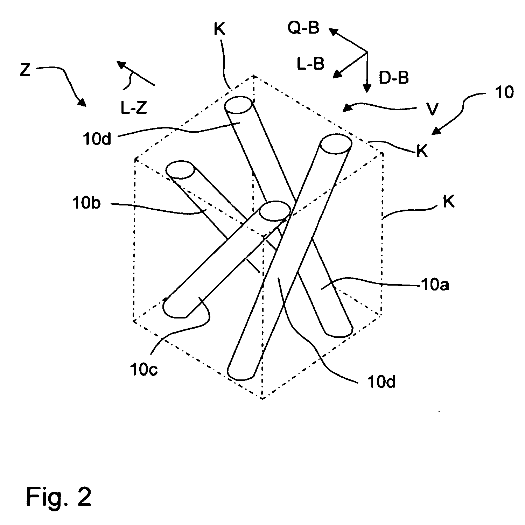

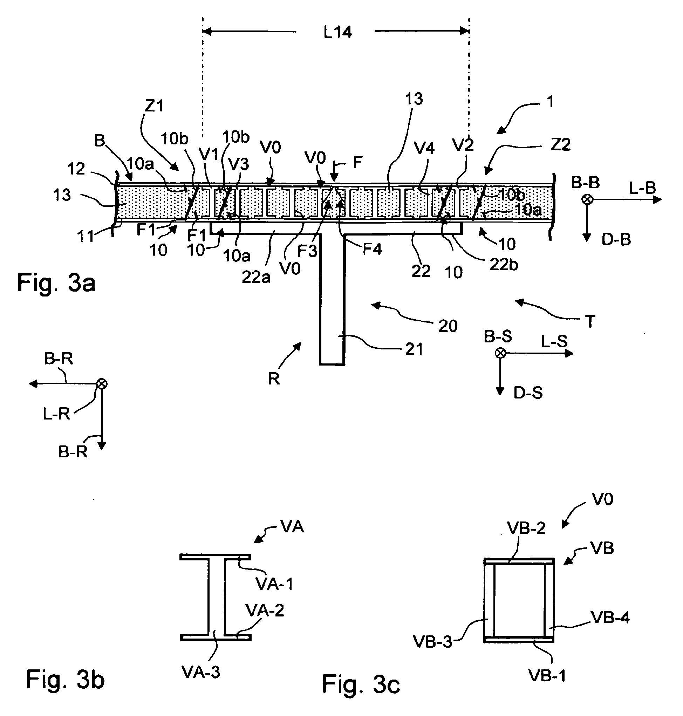

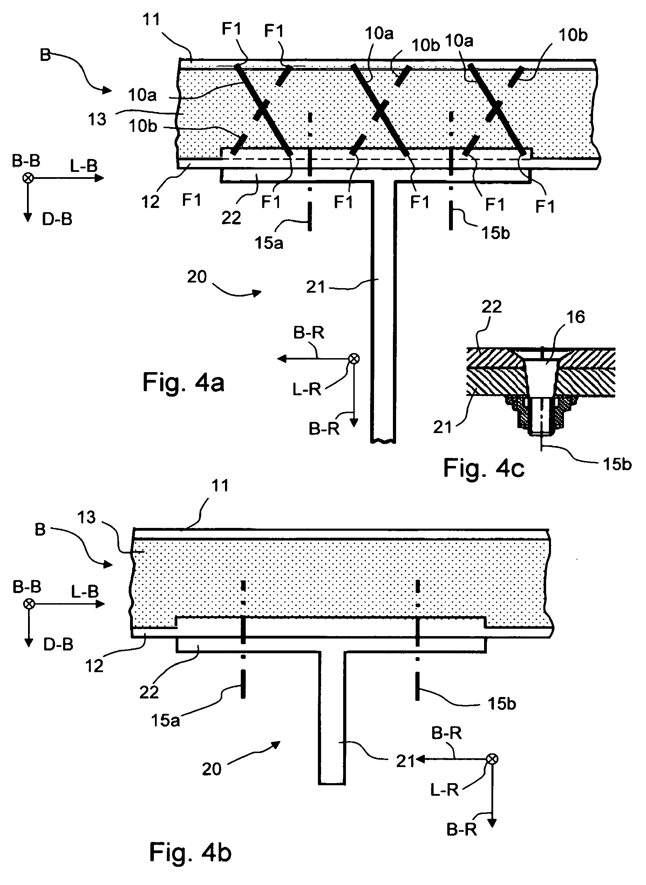

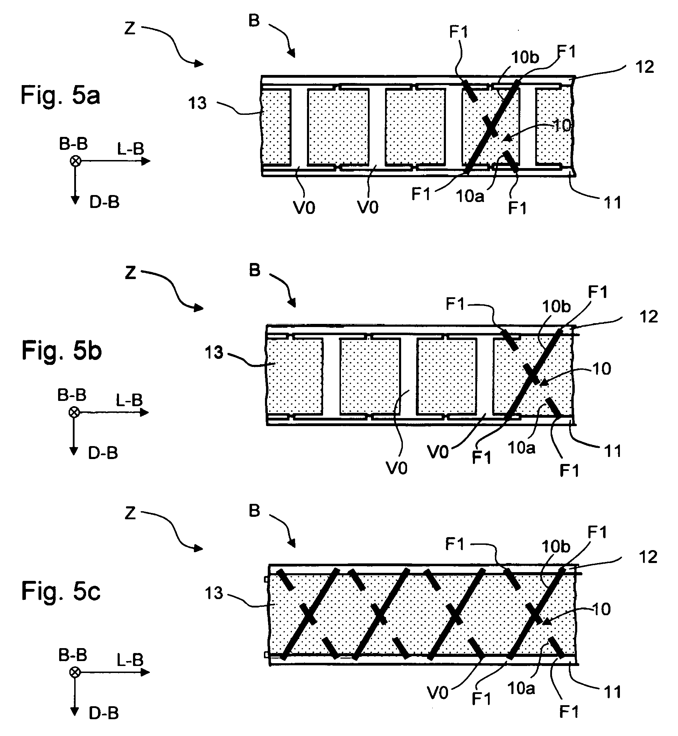

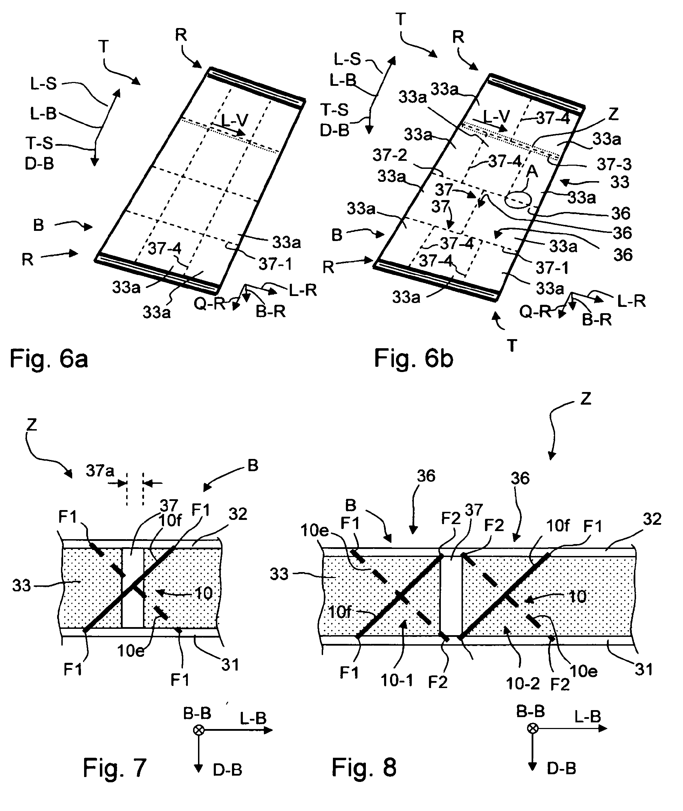

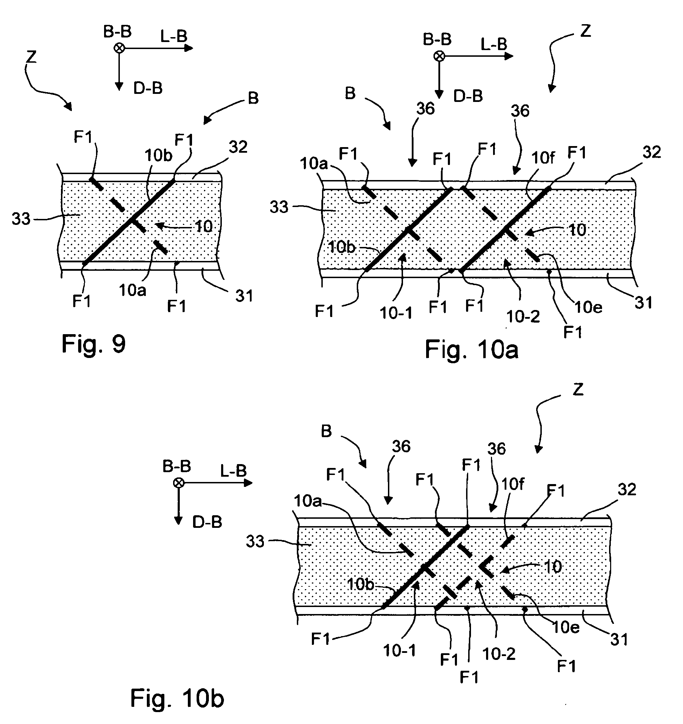

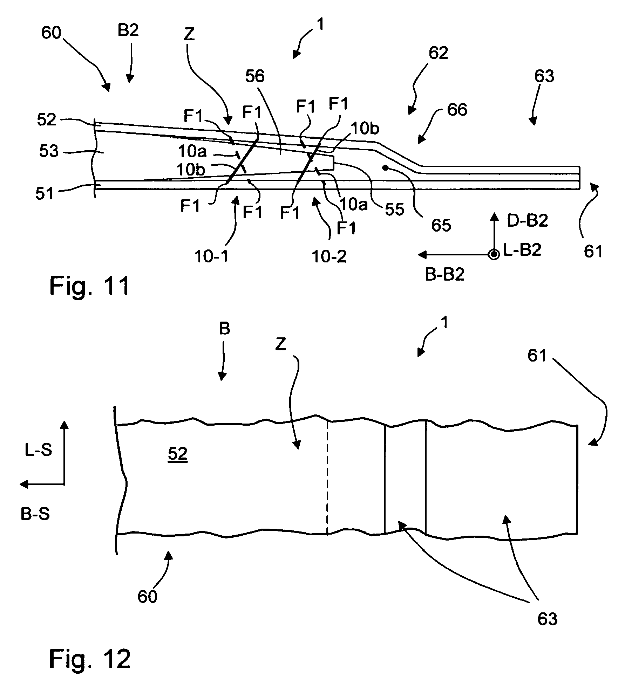

Im Folgenden werden Ausführungsbeispiele der Erfindung an Hand der beigefügten Figuren beschrieben, die zeigen:
▪ Figur 1 a eine schematische Draufsicht auf ein Strukturbauteil oder einen Abschnitt eines Seitenleitwerks als Beispiel des erfindungsgemäßen Strömungskörpers mit Trägerbauteilen und zwischen diesen verlaufenden Rippen, bei dem jedoch die bestimmungsgemäß vorgesehene Beplankungsschale nicht dargestellt ist, wobei schematisch die Lage von Zwischenbereichen oder Verstärkungsbereichen für die Anordnung von erfindungsgemäß vorgesehenen Verstärkungs-Vorrichtungen eingetragen sind,
▪ Figur 1b eine Schnittdarstellung des Strömungskörpers nach der Figur 1a entlang der in der Figur 1 a eingetragenen Linie V2-V2 mit der ebenfalls in der Figur 1 a eingetragenen Blickrichtung in Form zweier Pfeile,
▪ Figur 2 eine schematische Schnittdarstellung eines fiktiven Volumenteils als Teil des Zwischenbereichs der Beplankungsschale mit einer Ausführungsform einer Verstärkungs-Vorrichtung mit Verstärkungsteilen, die zyklisch in dem Volumenteil angeordnet sind,
▪ Figur 3a eine Schnittdarstellung eines Bereichs S3 des Strömungskörpers der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale ist, die nach einem Ausführungsbeispiel der Erfindung mit einem inneren, einem äußeren Hautabschnitt sowie einer zwischen diesen gelegenen schublast-aufnehmenden Kernschicht gestaltet ist,
▪ Figur3beine Darstellung einer ersten Ausführungsform einer Querschnittsform von in dem Strukturbauteil nach der Figur 3 verwendeten Verstärkungsprofilen,
▪ Figur 3c eine Darstellung einer zweiten Ausführungsform einer Querschnittsform von in dem Strukturbauteil nach der Figur 3 verwendeten Verstärkungsprofilen,
▪ Figur 4a eine Schnittdarstellung des Bereichs S3 des Strömungskörpers der Figuren 1 a und 1b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschale, bei der die Befestigung der Tragstruktur an der Beplankungsschale nach einem weiteren Ausführungsbeispiel der Erfindung ausgeführt ist,
▪ Figur 4b eine Schnittdarstellung des Bereichs S3 des Strömungskörpers der Figuren 1a und 1b, die entlang der in den Figuren 1a und 1b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschale, bei der die Befestigung der Tragstruktur an der Beplankungsschale nach einem weiteren Ausführungsbeispiel der Erfindung ausgeführt ist,
▪ Figur 4c eine Darstellung einer erfindungsgemäßen Ausführungsform eines Verbindungselements einer Verbindungsvorrichtung zur Verbindung eines Anschlussteils einer Trägerstruktur an der Beplankungsschale mit einem Verbindungselement,
▪ Figur 5a eine Querschnittsdarstellung eines Ausführungsbeispiels eines oberhalb der Rippenanordnung gelegenen Anschlussbereichs des Beplankungsschalen-Abschnitts der Beplankungsschale mit einem Verstärkungsprofilteilen, wobei in der Beplankungsschale zwischen zwei Verstärkungsprofilteilen eine Anordnung von X-förmig zueinander angeordneten Verstärkungs-Vorrichtungen nach der Erfindung integriert sind,
▪ Figur 5b eine Querschnittsdarstellung eines weiteren Ausführungsbeispiels eines oberhalb der Rippenanordnung gelegenen Anschlussbereichs des Beplankungsschalen-Abschnitts der Beplankungsschale mit einer Mehrzahl von Verstärkungsprofilteilen, wobei in der Beplankungsschale seitlich der Verstärkungsprofilteile eine Anordnung von X-förmig zueinander angeordneten Verstärkungs-Vorrichtungen nach der Erfindung integriert sind,
▪ Figur 5c eine Querschnittsdarstellung eines weiteren Ausführungsbeispiels eines oberhalb der Rippenanordnung gelegenen Anschlussbereichs des Beplankungsschalen-Abschnitts der Beplankungsschale, in den eine Mehrzahl von X-förmig zueinander angeordneten Verstärkungs-Vorrichtungen nach der Erfindung integriert sind,
▪ Figur 6a eine perspektivische Draufsicht auf eine erste Ausführungsform einer Beplankungsschale nach der Erfindung mit schematisch dargestellten Trägerstrukturen, wobei bei der Darstellung der Beplankungsschale schematisch Verstärkungsbereiche oder Verbindungsbereiche innerhalb der schublastaufnehmenden Kernschicht der Beplankungsschale eingetragen sind,
▪ Figur 6b eine perspektivische Draufsicht auf eine zweite, vorzugweise Ausführungsform einer Beplankungsschale nach der Erfindung mit schematisch nach der Figur 6a dargestellten Trägerstrukturen, bei der die Verstärkungsbereiche oder Verbindungsbereiche innerhalb der schublastaufnehmenden Kernschicht der Beplankungsschale gegenüber der in der Figur 6a verändert sind,
▪ Figur 7 einen Querschnitt eines ersten Ausführungsbeispiels eines in der Figur 6 mit "A" bezeichneten Bereichs der Beplankungsschale nach der Figur 7, der mit einem Verbindungsbereich aus Harz sowie eine Ausführungsform einer im Zusammenhang mit dem Verbindungsbereich vorgesehenen Anordnung von Rippenanordnungs-Verstärkungsprofilen aufweist,
▪ Figur 8 einen Querschnitt eines zweiten Ausführungsbeispiels eines in der Figuren 6a und 6b mit "A" bezeichneten Bereichs der Beplankungsschale nach den Figuren 6a oder 6b, der mit einem Verbindungsbereich aus Harz sowie einer weiteren Ausführungsform einer im Zusammenhang mit dem Verbindungsbereich vorgesehenen Anordnung von Rippenanordnungs-Verstärkungsprofilen aufweist,
▪ Figur 9 einen Ausschnitt eines Querschnitts der Beplankungsschale, in die eine Reihe von Verstärkungsvorrichtungen mit jeweils einer Anordnung von zwei Verstärkungsteilen, die zueinander X-förmig gelegen sind, eingebracht sind, wobei in der Figur 9 die Verstärkungsteile einer Verstärkungsvorrichtung dargestellt sind,
▪ Figur 10a einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind,
▪ Figur 10b einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind, wobei die Verstärkungsvororichtungen derart angeordnet sind, dass sich die Verstärkungsteile der verschiedenen Verstärkungsvorrichtungen in der Längsrichtung ihres Verlaufs gesehen einander kämmen und reissverschlussartig zueinander angeordnet sind,
▪ Figur 11 einen Querschnitt eines Bereichs der Beplankungsschale mit einem schublastaufnehmende kernschichtfreien Anschlussbereich mit dem inneren Hautabschnitt, einem äußeren Hautabschnitt und einer monolithischen Zwischenschicht, wobei an dem an dem Anschlussbereich ein Bereich der Beplankungsschale verläuft, in dem Rippenanordnungs-Verstärkungsprofile in den Schublastaufnehmende Kernschicht eingesetzt sind, und
▪ Figur 12 eine Draufsicht auf einen Abschnitt des Beplankungsschalen-Bereichs nach der Figur 11.

Die erfindungsgemäß vorgesehene Beplankungsschale B oder Beplankungsplatte ist als hauptlast-tragendes Verkleidungsteil oder Beplankungsteil eines Strömungskörpers und insbesondere eines aerodynamischen Körpers vorgesehen. Die Figur 1 a zeigt eine schematische Draufsicht auf ein Strukturbauteil 1 oder einen Abschnitt eines Seitenleitwerks als Beispiel des erfindungsgemäßen Strömungskörpers oder aerodynamischen Körpers mit einer hauptlast-tragenden Beplankungsschale B, die generell auch als Beplankungsplatte ausgeführt sein kann. Das dargestellte Strukturbauteil 1 ist aus einer Trägerstruktur T und einer diese umgebenden und mit dieser verbundenen Beplankungsschale B gebildet. Erfindungsgemäß ist die Beplankungsschale B als Sandwich und aus einem ersten oder inneren Hautabschnitt 11, einem zweiten oder äußeren Hautabschnitt 12 sowie einer zwischen diesen gelegenen schublast-aufnehmenden Kernschicht 13 oder einem zwischen diesen gelegenen schublast-aufnehmenden Schaumkern gebildet (Figur 4). Unter der Bezeichnung "innerer Hautabschnitt 11" wird in Bezug auf deren Lage und Orientierung ein Hautabschnitt verstanden, der auf der Innenseite der Beplankungsschale B gelegen und somit einem von der Beplankungsschale B abzudeckenden Inneren oder Innenraum eines Strukturbauteils 1 oder eines Strömungskörpers zugewandt ist. Bei der Verwendung des Strukturbauteils 1 für einen Strömungskörper ist die "äußere Hautabschnitt 12" der bestimmungsgemäß am Strömungskörper anliegenden Strömung zugewandt.

Die Figur 1 b zeigt einen Schnitt entlang der in der Figur 1 a eingetragenen Linie V2-V2 und zeigt einen Teil eines Strömungskörpers 1, der aus zwei zueinander beabstandeten Beplankungsschalen B gebildet, von denen eine erste Beplankungsschale B1 und eine zweite Beplankungsschale B2 entlang zueinander und beabstandet voneinander verlaufen. Deren Außenflächen bilden die Strömungsflächen des Strömungskörpers 1. Der Strömungskörper 1 kann z. B. Teil eines Seitenleitwerks oder Seitenruders oder Teil eines Flügels oder einer Stellklappe sein. Bei der Ausführung des Strömungskörpers 1 als Seitenleitwerk oder Seitenruder sind die Außenseiten der Beplankungsschalen B1, B2 vorzugsweise achsensymmetrisch zueinander gebildet. Bei der Ausführung des Strömungskörpers 1 als Flügel oder einer Stellklappe können die Außenseiten der Beplankungsschalen B1, B2 achsensymmetrisch oder nicht symmetrisch zueinander gebildet sein. Insbesondere kann bei einer derartigen Verwendung des Strömungskörpers 1 an einem Flugzeug bei einer angenommenen Strömungsrichtung U für eine bei einer solchen Verwendung bestimmungsgemäßen Hauptumströmung beispielsweise die Außenseite der ersten Beplankungsschale B1 die Saugseite und die Außenseite der zweiten Beplankungsschale B2 die Druckseite des Strömungskörpers bilden.

In der Figur 1 b ist nur ein Teil des Strömungskörpers 1 dargestellt, der in der Breitenrichtung oder Tiefenrichtung B-S gesehen von Randseiten oder Rand-Endstücken R1, R2 begrenzt ist, die von sich in der Längsrichtung L-S erstreckenden Trägerbauteilen 5 bzw. 6 der Trägerstruktur T gebildet werden. An den Trägerbauteilen 5, 6 sind Rippen oder Rippen-Anordnungen R derart befestigt, dass diese sich beabstandet voneinander zwischen den Trägerbauteilen 5 und 6 erstrecken. Die Rippen oder Rippen-Anordnungen R dienen als Versteifungsbauteile für die Beplankungsschalenteile B1 bzw. B2. Die Beplankungsschalenteile B1 bzw. B2 können an ihren in der Breiten-Richtung B-S des Strukturbauteils 1 gelegenen Enden als Randbereiche 60 ausgebildet sein, die z. B. abschnittsweise keine Kernschicht 13 aus Schaum aufweisen, wie diese an Hand der Figuren 11 und 12 beschrieben werden. An den Beplankungsschalenteilen B1 bzw. B2 können sich in der Breiten-Richtung B-S des Strukturbauteils 1 gesehen hintereinander eine oder mehrere Beplankungsschalenteile B1 bzw. B2 anschließen, wobei insbesondere zwei Beplankungsschalenteile B1 bzw. B2 an jeweils einer 5, 6 angebracht sein können. Alternativ kann sich ein Beplankungsschalenteil B1, B2 auf jeder oder einer der Seiten in Bezug auf die Dickenrichtung D-S von mehr als zwei Trägerbauteilen 5, 6 gehalten werden. Dabei weist also der Strömungskörper 1 von mehr als zwei jeweils voneinander in der Breitenrichtung B-S voneinander beabstandet verlaufenden Trägerbauteilen 5, 6 auf, und erstreckt sich jedes der Beplankungsschalenteile B1 bzw. B2 zwischen den zwei in Bezug auf die Bereitenrichtung äußeren Trägerbauteile 5, 6 und über zumindest ein weiteres Trägerbauteil hinweg.

Der innere Hautabschnitt 11 und der äußere Hautabschnitt 12 kann jeweils aus Fiberglas oder aus einem kohlenstoff-basierten Material gebildet sein und insbesondere ein Faserverbundkunststoff sein. Der innere Hautabschnitt 11 und der äußere Hautabschnitt 12 erstreckt sich jeweils über die Beplankungsschale B. Die schublast-aufnehmende Kernschicht 13 kann generell bei der Erfindung bzw. den verschiedenen Aspekten der Erfindung als Massivkern oder als Schaumkern gestaltet sein. In der Ausführungsform der Kernschicht als Massivkern kann die Kernschicht aus einem Kunststoff und insbesondere aus Polyethylen und/oder Polybuthylen gebildet sein. Alternativ oder zusätzlich kann die Kernschicht aus Plexiglas gebildet sein. In der Ausführungsform der Kernschicht als Schaumkern kann die Kernschicht aus einem PVC-Schaum oder einem geschäumten Plexiglas gebildet sein. Erfindungsgemäß sind in der Beplankungsschale B zur Beeinflussung von Schubspannungen in der Kernschicht mehrere Verstärkungsteile und/oder Verstärkungs-Vorrichtungen 10 integriert, die jeweils zumindest 85 % der schublast-aufnehmenden Kernschicht 13 in deren Dickenrichtung durchragen, um die Rissfestigkeit der Beplankungsschale B zu verbessern (nicht in der Figur 1 a gezeigt).

Die Trägerstruktur T kann insbesondere gebildet sein aus (Figuren 1a und 3): zumindest zwei jeweils entlang einer Längsrichtung L-S des Strukturbauteils 1 und in einem Abstand in Tiefenrichtung oder Querrichtung B-S des Strukturbauteils 1 nebeneinander verlaufenden Trägerbauteilen oder Trägerprofilen 5, 6 und/ oder zumindest einer zwischen und quer zu diesen verlaufenden und entlang ihrer Längsrichtung L-R mit der Beplankungsschale B verbundenen Rippen-Anordnung R zur flächigen Abstützung der Beplankungsschale B an der Trägerstruktur T. Die Breite der Versteifungsrippen der Rippen-Anordnung R erstreckt sich in der Tiefenrichtung T-S des Strukturbauteils 1. In Längsrichtung L-S des Strukturbauteils 1 können die Trägerbauteile 5, 6 mittels jeweils einem Endabschnitt E1 bzw. E2 verbunden sein. Die Trägerbauteile 5, 6 können insbesondere Längsversteifungs-Bauteilkomponenten oder Längsspante oder Holme sein. Wenn beispielsweise der Strömungskörper ein Flugzeugteil ist, können die Trägerbauteile 5, 6 Längsspante oder Holme eines Rumpfs, eines Tragflügels, eines Seitenleitwerks, einer Stellklappe oder einer Höhenflosse sein. Jede der Rippen-Anordnungen R oder zumindest eine von mehreren Rippen-Anordnungen R der Trägerstruktur T weist auf: ein Flanschteil 22, das entlang der Rippen-Längsrichtung L-R flächig mit der Beplankungsschale verbunden ist, und eine daran anschließende und von dem Flanschteil 22 bzw. der Beplankungsschale B in seiner Querrichtung Q-R abstehende Rippe 21. Die Rippe 21 und das Flanschteil 22 können einstückig hergestellt sein. Insbesondere kann vorgesehen sein, dass die Rippe 21 und das Flanschteil 22 jeweils getrennt oder zusammen als ein Bauteil als Faserverbundkunststoff hergestellt ist. In die Figuren 1a und 1b ist auch ein auf die Beplankungsschale bezogenes Koordinatensystem mit der Beplankungsschalen-Längsrichtung L-B, der Beplankungsschalen-Querrichtung B-B und der Beplankungsschalen-Dickenrichtung D-B, als Achsen eingetragen.

Die Figur 1 a zeigt auch Zwischenbereiche oder mit den erfindungsgemäß vorgesehenen Verstärkungsteilen und/oder Verstärkungs-Vorrichtungen 10 zu verstärkende Bereiche des Schaumkerns.

Die erfindungsgemäße hauptlast-tragende Beplankungsschale B kann insbesondere zur Herstellung eines solchen Strukturbauteils 1 angewendet werden. Da die Beplankungsschale B auf der Trägerstruktur T zur Ausbildung einer Außenseite des Strömungskörpers befestigt ist und insofern wesentlich für die Herstellung einer Umströmung des Strömungskörpers ist und dabei die äußeren Luftkräfte aufnimmt sowie in vorbestimmten Umfang die Wirkungen von auf die Beplankungsschale B auftreffenden Gegenständen kompensieren soll, ist die Beplankungsschale B eine hauptlast-tragende Strukturkomponente des Strukturbauteils 1. Bei der Kompensation von Wirkungen von auf die Beplankungsschale B auftreffenden Gegenständen wird mit der erfindungsgemäßen Beplankungsschale B erreicht, dass die Beplankungsschale B nach dem Auftreffen der Gegenstände als insgesamt stabiles Gebilde erhalten bleibt, das danach weiterhin die Strömungskräfte aufnimmt.

Die Figur 3 zeigt eine Ausführungsform einer erfindungsgemäßen Kombination einer Trägerstruktur T mit einer Stützanordnung, die insbesondere eine insgesamt T-förmige Rippen-Anordnung R sein kann, und einer Beplankungsschale 22, die nach der Erfindung mit einem inneren, einem äußeren Hautabschnitt 11 bzw. 12 sowie einer zwischen diesen gelegenen schublast-aufnehmenden Kernschicht 13 gestaltet ist. Die Figur 3 ist eine Schnittdarstellung eines Bereichs S3 des Strömungskörpers 1 der Figuren 1 a und 1b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale B ist. Die Beplankungsschale B ist nach einem Ausführungsbeispiel der Erfindung mit einem in Bezug auf den Strömungskörper 1 inneren Hautabschnitt 11 und einem äußeren Hautabschnitt 12 sowie einer zwischen diesen gelegenen schublast-aufnehmenden Kernschicht 13 gebildet. Erfindungsgemäß können in die Kernschicht 13 seitlich der Rippen-Anordnung R Verstärkungs-Vorrichtungen 10 oder Rippenanordnungs-Verstärkungsprofilteile eingesetzt sein. Generell kann die Trägerstruktur T auch eine Stützanordnung, lediglich eine Rippe 21 ohne plattenförmiges Verbindungsstück 22 aufweisen, oder eine Stützanordnung sein, die lediglich ein plattenförmiges Verbindungsstück 22 aufweist.

Erfindungsgemäß kann dabei vorgesehen sein, dass in der Beplankungsschale B entlang eines quer zur Rippenanordnungs-Längsrichtung L-R verlaufenden Beplankungsschalen-Abschnitts, der einen Anschlussbereich 14 der Trägerstruktur T, also z. B. eines Trägerbauteils 5, 6 und/ oder der Rippen-Anordnung R an der Beplankungsschale B bildet, ein oder mehrere Profilträger oder Rippenanordnungs-Verstärkungsprofilteile V0 eingebracht oder integriert sind. Beispielsweise sind zur Verstärkung der Beplankungsschale B im Anschlussbereich eines Trägerbauteils 5, 6 an derselben oder im Anschlussbereich einer Stützanordnung oder Rippenanordnung R Profilträger als Trägerbauteil-Verstärkungsprofilträger oder -Verstärkungsprofilteile bzw. Rippenanordnungs-Verstärkungsprofilträger oder -Verstärkungsprofilteile angeordnet. Der Anschlussbereich 14 ist derjenige Bereich der Beplankungsschale B in dessen flächiger Erstreckung, der in der Dickenrichtung D-B der Beplankungsschale B gesehen den Bereich überdeckt oder schneidet, den die Trägerstruktur T oder das Trägerbauteil 5, 6 bzw. die Stütz- oder Rippen-Anordnung R mit ihrer der Beplankungsschale B zugewandten Seite umgrenzt oder in deren Grenzen die jeweilige Trägerstruktur T an der Beplankungsschale B anliegt. Die der Beplankungsschale B zugewandte Seite der Trägerstruktur T ist im gezeigten Ausführungsbeispiel mit der Rippen-Anordnung R die der Beplankungsschale B zugewandte Seite des Flanschteils der Rippen-Anordnung R. Die Profilträger V0 verbinden das Flanschteil 22 oder den inneren Hautabschnitt 11 und den äußeren Hautabschnitt 12 zur Stabilisierung der Beplankungsschale B bei Beschädigung derselben von außen miteinander.

Der zumindest eine oder die Profilträger V0 können als längliche oder plattenförmige Verstärkungsprofilträger ausgebildet sein. Dabei können sich die Profilträger V0 in einer Referenz-Längsrichtung erstrecken, die in der Längserstreckung der jeweiligen Trägerstruktur T gerichtet ist. Die Längserstreckung der Trägerbauteile nach der Figur 1 a verläuft entlang des an diesem anliegenden Randbereichs der Beplankungsschale B, so dass in dieser Hinsicht die Referenz-Längsrichtung der Profilträger V0 entlang des Randbereichs der Beplankungsschale B verläuft. Die Referenz-Längsrichtung einer Stützanordnung oder einer Rippenanordnung R verläuft in Richtung der Längserstreckung derselben und insbesondere entlang der Stützanordnungs- bzw. Rippenanordnungs-Längsrichtung L-R, d.h. parallel zu der Stützanordnungs- bzw. Rippenanordnungs-Längsrichtung L-R oder schräg zu dieser. Bei dem Vorsehen von mehreren Profilträgern V0 können diese insbesondere in einer Referenz-Längsrichtung gesehen, die im gezeigten Ausführungsbeispiel die Rippenanordnungs-Längsrichtung L-R ist, nebeneinander angeordnet sein und nebeneinander verlaufen.

Die Referenz-Längsrichtung ist dabei die Erstreckungsrichtung eines mittels der Profilträger V0 zu verstärkenden oder für Belastungsfälle zu stabilisierenden Bereichs. Insbesondere kann der zur verstärkende oder zu stabilisierende Bereich der Anschlussbereich einer Trägerstruktur T wie eines Trägerbauteils 5, 6 oder einer Rippenanordnung R sein. Dieser kann insbesondere der Verbindungsbereich von Flanschteil 22 und der Beplankungsschale B sein. Durch das Vorsehen der Profilträger V0 werden in dem der Rissbildungen in der Kernschicht 13 aufgrund von größeren Spannungen in der Kernschicht 13, die sich durch äußere Belastungen in diesem Bereich ergeben, vermieden und/oder lokal aufgehalten. Berechnungen und umfangreiche Versuche haben den positiven Effekt dieser erfindungsgemäßen Lösungsmaßnahme aufgezeigt.

Unter der Rippenanordnungs-Längsrichtung L-R ist dabei die Richtung zu verstehen, die entlang der Längserstreckung der Beplankungsschale B und der Längsrichtung der Rippe 21 verläuft. Bei dem Vorsehen mehrerer Rippen kann die Rippenanordnungs-Längsrichtung L-R insbesondere entlang der Längsrichtung einer dieser Rippen oder einer Hauptrippe verlaufen. Unter der Rippenanordnungs-Querrichtung Q-R ist diejenige Richtung zu verstehen, die senkrecht zu der Rippenanordnungs-Längsrichtung L-R und die quer zur Längserstreckung der Beplankungsschale B und in Breitenrichtung, also der Haupterstreckung der Rippe 21 verläuft. In der Figur 3 ist auch die Rippenanordnungs-Breitenrichtung B-R gezeigt, die senkrecht zu der Rippenanordnungs-Längsrichtung L-R und der Rippenanordnungs-Querrichtung Q-R gerichtet ist.

Bei dem in der Figur 3a gezeigten Ausführungsbeispiel sind mehrere Rippenanordnungs-Verstärkungsprofilteile V0 in der Rippenanordnungs-Breitenrichtung B-R gesehen hintereinander bzw. in der Rippenanordnungs-Längsrichtung L-R gesehen nebeneinander angeordnet. In der Figur 3 ist eine Ausführungsform der Rippen-Anordnung R gezeigt, bei der über den gesamten Verbindungsbereich von Flanschteil 22 und der Beplankungsschale B Rippenanordnungs-Verstärkungsprofilteile V0 verteilt sind. In dem in der Figur 3 dargestellten Querschnitt eines Ausführungsbeispiels der Rippen-Anordnung R sind insgesamt zehn Rippenanordnungs-Verstärkungsprofilteile V0 in der Rippenanordnungs-Längsrichtung L-R gesehen nebeneinander gelegen. In der Figur 3 sind die an den in der Rippenanordnungs-Längsrichtung L-R gesehen jeweils äußeren Verstärkungsprofilträger V0 mit den Bezugzeichen V1, V3 bzw. V2, V4 bezeichnet. Generell können die Rippenanordnungs-Profilteile V0 insbesondere in gleichmäßigen Abständen im gesamten Bereich des Flanschteils 22 oder über einen Abschnitt des Flanschteils 22 verteilt sein.

Bei einer in der Figur 3b dargestellten Ausführungsform des Verstärkungsprofilträgers V0 kann dieser (Bezugszeichen VA) aus zwei Profilplatten VA-1, VA-2, von denen einer mit dem inneren Hautabschnitt 11 und der jeweils andere mit dem äußeren Hautabschnitt 12 verbunden ist, und einer diese verbindenden Stützrippe VA-3 gebildet sein, so dass dessen Profilquerschnitt ein Doppel-T-Profilquerschnitt ist.

In der Figur 4a ist eine Schnittdarstellung des Bereichs S3 des Strömungskörpers der Figuren 1 a und 1 b gezeigt, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt 11, 12 sowie einer zwischen diesen gelegenen schublast-aufnehmenden Kernschicht 13 gestalteten Beplankungsschale B, bei der das Anschlussteil 22 mit der Beplankungsschale B mit dem inneren Hautabschnitt 12 mittels Verbindungselementen 16 befestigt ist. Beispielartig ist die Lage der Verbindungselemente 16 mit den Positionslinien 15a und 15b gezeigt. Insbesondere kann vorgesehen sein, dass in der von der Längsrichtung L-B und der Dickenrichtung D-B aufgespannten Ebene gesehen seitlich der Rippe 21 Verbindungselemente 16 das Anschlussteil 22 und den äußeren Hautabschnitt 12 verbinden, die insbesondere jeweils zumindest eine in der Breitenrichtung B-B verlaufende Reihe von Verbindungselementen 16 bilden können. Die Reihen können insbesondere auch parallel zueinander verlaufen. Auch können die Reihen von in regelmäßigen Abständen voneinander beabstandeten Verbindungselementen 16 gebildet sein.

Wie an Hand der Ausführungsform nach der Figur 4b gezeigt, müssen insbesondere im Bereich des Anschlussbereichs 14 keine Profilträger wie gemäß der Ausführungsform nach der Figur 3a zwischen den Hautabschnitten 11, 12 angeordnet sein. Die Anordnung von Verbindungselementen 16 zur Verbindung des Anschlussteils 22 mit dem äußeren Hautabschnitt 12 kann wie an Hand des Ausführungsbeispiels nach der Figur 4a vorgesehen sein.

Als Beispiel für das erfindungsgemäß verwendbare Verbindungselement 16 ist in der Figur 4c ein Niet dargestellt, der das Anschlussteil 22 an den Hauptabschnitt 12 befestigt.

Im Anschlussbereich kann insbesondere vorgesehen sein, dass der innere Hautabschnitt, an dem das Anschlussteil 22 anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

In der Ausführungsform der Kombination der Beplankungsschale B und eines Trägerbauteils 5, 6 und/ oder der Rippen-Anordnung R an der Beplankungsschale B nach der Figur 4a sind in dem Anschlussbereich 14 der Beplankungsschale B und optional in der Breitenrichtung B-R seitlich neben diesem Verstärkungsteile 10a, 10b, oder Verstärkungsvorrichtungen 10 insbesondere nach einer erfindungsgemäß vorgesehenen und/oder hierin beschriebenen Art angeordnet. Dabei können Verstärkungsteile 10a, 10b oder Verstärkungsvorrichtungen 10 in einer Reihe in der Breitenrichtung B-R der Rippenanordnung gesehen oder in der Breitenrichtung des Trägerbauteils gesehen nebeneinander und/ oder in der Längsrichtung L-R der Rippenanordnung bzw. in der Längsrichtung des Trägerbauteils angeordnet sein. In diesen Fällen können, wie es in der Figur 4a dargestellt ist, auch Paare von Verstärkungsteilen 10a, 10b in jeweils X-förmiger Anordnung in die Beplankungsschale B eingebracht sein. Die Verstärkungsteile verlaufen generell in der Dickenrichtung der Beplankungsschale B oder schräg zu dieser und können dabei innerhalb der Kernschicht 13 derart gelegen sein, dass ihre Enden F1 zu den Hautabschnitten 11, 12 beabstandet sind oder eines ihrer Enden F1 zu einem der Hautabschnitte 11, 12 beabstandet ist, oder die Verstärkungsteile können derart gelegen sein, dass diese den inneren und den äußeren Hautabschnitt 11, 12 jeweils verbinden, also in den inneren und/ oder äußeren Hautabschnitt 11, 12 teilweise eindringen. Der innere Hautabschnitt 51 und/oder der äußere Hautabschnitt 52 kann jeweils aus mehreren Hautlagen gebildet und/oder zumindest ein Teil der Verstärkungs-Vorrichtungen 10, 10a, 10b, 10c, 10d; 10e, 10f können derart angeordnet sein, dass deren Enden F1 oder eines der Enden F1 derselben den inneren Hautabschnitt 51 und/oder den äußeren Hautabschnitt 52 jeweils zumindest die erste Hautlage durchragen. Generell durchragen also die Verstärkungsteile zumindest teilweise die schublast-aufnehmende Kernschicht 13.

Bei einer in der Figur 4b dargestellten Ausführungsform des Verstärkungsprofilträgers V0 kann dieser (Bezugszeichen VB) derart ausgeführt sein, dass der Profilquerschnitt des Verstärkungsprofilträgers ein Kasten-Profilquerschnitt ist. Dabei kann der Verstärkungsprofilträger VB aus zwei Profilplatten VB-1, VB-2, von denen einer mit dem inneren Hautabschnitt 11 und der jeweils andere mit dem äußeren Hautabschnitt 12 verbunden ist, und zwei diese verbindenden Stützrippen VB-3, VB-4 zur Bildung eines Kasten-Profilquerschnitts gebildet sein.

Durch die Anordnung der Verstärkungsteile und/oder Verstärkungs-Vorrichtung 10 entlang der Rippen-Anordnung R wird erreicht, dass sich Beschädigungen der Beplankungsschale B z. B. in Form von Rissen in der schublast-aufnehmenden Kernschicht 13 im Bereich der Rippen-Anordnung R nicht oder in reduziertem Maße auf den sich neben der Rippen-Anordnung R erstreckenden flächigen Bereich der Beplankungsschale B übertragen. Auch wird umgekehrt durch die Anordnung der Verstärkungs-Vorrichtung 10 entlang der Rippen-Anordnung R erreicht, dass sich Beschädigungen der Beplankungsschale B z. B. in Form von Rissen in der schublastaufnehmenden Kernschicht 13 im neben der Rippen-Anordnung R erstreckenden flächigen Bereich der Beplankungsschale B auf den im Bereich der Rippen-Anordnung R gelegenen Bereich der Beplankungsschale B nicht oder in reduziertem Maße übertragen.

Nach einem Ausführungsbeispiel des erfindungsgemäßen Strukturbauteils 1 sind zwischen in der Rippenanordnungs-Längsrichtung L-R gesehen nebeneinander gelegenen Rippenanordnungs-Verstärkungsprofilteilen V0 der Rippen-Anordnung R zumindest eine Verstärkungs-Vorrichtung 10 angeordnet. Nach dem in der Figur 3 gezeigten Ausführungsbeispiel sind in der Rippenanordnungs-Querrichtung Q-R gesehen zwischen den äußeren Rippenanordnungs-Verstärkungsprofilteilen V1 und V3 bzw. V2 und V4 Verstärkungs-Vorrichtungen 10 nach der Erfindung angeordnet. Diese Konstellation kann in der Rippenanordnungs-Längsrichtung L-R mehrfach hintereinander vorgesehen sein. Auch kann zwischen mehreren, also z. B. zwischen zwei, drei oder vier äußeren Rippenanordnungs-Verstärkungsteilen jeweils zumindest eine Verstärkungs-Vorrichtung 10 nach der Erfindung angeordnet sein. Dabei können die Verstärkungs-Vorrichtung 10 und die jeweils zugeordneten Rippenanordnungs-Verstärkungsteile auch in der Rippenanordnungs-Querrichtung Q-R gesehen versetzt zueinander angeordnet sein. Bei diesen Ausführungsbeispielen treten diese Konstellationen vorzugsweise in der Rippenanordnungs-Längsrichtung L-R hintereinander liegend wiederholt auf und können sich über die Länge der Rippen-Anordnung R in der Beplankungsschale B verteilen.

In der Figur 3 ist schematisch eine Rissbildung im Schaumkern 13 dargestellt: ein Gegenstand F1 schlägt mit einem Impuls F auf der Beplanungsschale B auf, Die dabei entstehenden Risse im Schaumkern 13 sind mit den Bezugszeichen F3 und F4 gezeigt.

Bei der erfindungsgemäßen Kombination einer Beplankungsschale B und einer Rippenanordnung R können auch Verstärkungsteile und/oder zumindest eine Verstärkungsvorrichtung 10 anstelle von Rippenanordnungs-Verstärkungsprofilteilen V0 in die Beplankungsschale nach einer der hierin beschriebenen Arten angeordnet sein.

Bei den erfindungsgemäß vorgesehenen Ausführungsformen der Beplankungsschale B können die Verstärkungs-Vorrichtungen 10 generell jeweils aus zumindest einem Verstärkungsteil gebildet sein. Dabei kann ein Verstärkungsteil als stiftförmiges Verstärkungsteil mit z. B. runder oder rechteckiger Querschnittsform ausgeführt sein.

Die Verstärkungsvorrichtungen 10 sind jeweils aus zumindest einem Verstärkungsteil 10a, 10b, 10c, 10d, 10e, 10f gebildet. Ein solches Verstärkungsteil 10a, 10b, 10c, 10d, 10e, 10f kann insbesondere als längliches und/ oder plattenförmiges Element gebildet sein. Die Verstärkungsteile 10a, 10b, 10c, 10d, 10e, 10f somit insbesondere pinförmig oder nadelförmig gestaltet sein. In den Figuren 2, 5a, 5b, 9, 10a, 10b sind die jeweils dargestellten Verstärkungsteile 10a, 10b, 10c, 10d, 10e, 10f mit den Bezugszeichen 10a, 10b, 10e oder 10f bezeichnet.

Nach einer weiteren, in der Figur 5c dargestellten erfindungsgemäßen Ausführungsform der Kombination der Beplankungsschale B und eines Trägerbauteils 5, 6 und/ oder der Rippen-Anordnung R an der Beplankungsschale B kann vorgesehen sein, dass in dem Anschlussbereich 14 der Beplankungsschale B und optional in der Breitenrichtung B-R seitlich neben diesem Verstärkungsteile 10a, 10b, 10c, 10d, 10e, 10f oder Verstärkungsvorrichtungen 10 insbesondere nach einer erfindungsgemäß vorgesehenen und/oder hierin beschriebenen Art angeordnet sind. Dabei ist insbesondere vorgesehen, dass in dem Anschlussbereich 14 keine Profilteile eingesetzt sind (Figur 5c). Dabei können Verstärkungsteile 10a, 10b, 10c, 10d, 10e, 10f oder Verstärkungsvorrichtungen 10 in einer Reihe in der Breitenrichtung B-R der Rippenanordnung oder in der Breitenrichtung des Trägerbauteils nebeneinander und/ oder in der Längsrichtung L-R der Rippenanordnung bzw. in der Längsrichtung des Trägerbauteils angeordnet sein. In diesen Fällen können, wie es in der Figur 5c dargestellt ist, auch Paare von Verstärkungsteilen 10a, 10b, 10c, 10d, 10e, 10f in jeweils X-förmiger Anordnung in die Beplankungsschale B eingebracht sein.

Die Verstärkungsteile verlaufen generell in der Dickenrichtung der Beplankungsschale B oder schräg zu dieser und können dabei innerhalb der Kernschicht 13 derart gelegen sein, dass ihre Enden F1 zu den Hautabschnitten 11, 12 beabstandet sind oder eines ihrer Enden F1 zu einem der Hautabschnitte 11, 12 beabstandet ist, oder die Verstärkungsteile können derart gelegen sein, dass diese den inneren und den äußeren Hautabschnitt 11, 12 jeweils verbinden, also in den inneren und/ oder äußeren Hautabschnitt 11, 12 teilweise eindringen. Der innere Hautabschnitt 51 und/oder der äußere Hautabschnitt 52 kann jeweils aus mehreren Hautlagen gebildet und/oder zumindest ein Teil der Verstärkungs-Vorrichtungen 10, 10a, 10b, 10c, 10d; 10e, 10f können derart angeordnet sein, dass deren Enden F1 oder eines der Enden F1 derselben den inneren Hautabschnitt 51 und/oder den äußeren Hautabschnitt 52 jeweils zumindest die erste Hautlage durchragen. Generell durchragen also die Verstärkungsteile zumindest teilweise die schublast-aufnehmende Kernschicht 13.

Die Verstärkungsteile können insbesondere derart in der Beplankungsschale B gelegen sein, dass der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

Die nach der Erfindung vorgesehenen Verstärkungsvorrichtungen 10 können generell in einer Referenz-Längsrichtung gesehen, die im gezeigten Ausführungsbeispiel die Rippenanordnungs-Längsrichtung L-R ist, hintereinander angeordnet sein. Weiterhin können Verstärkungsteile V auch quer zur Referenz-Längsrichtung bzw. Rippenanordnungs-Längsrichtung L-R gesehen hintereinander angeordnet sein. Dabei können Verstärkungsteile und/oder Verstärkungsvorrichtungen 10 in mehreren nebeneinander verlaufenden Reihen von Verstärkungsteilen und/oder Verstärkungsvorrichtungen 10 angeordnet sein. Solche Reihen von Verstärkungsvorrichtungen 10 können auch einander kämmend (Figur 10b) angeordnet sein, bei denen die Verstärkungsvorrichtungen 10 sich in ihrer Erstreckung in der Referenz-Längsrichtung bzw. Rippenanordnungs-Längsrichtung L-R überlappen, wobei die Verstärkungsteile und/oder Verstärkungsvorrichtungen 10 auch in der Referenz-Längsrichtung bzw. Rippenanordnungs-Längsrichtung L-R beabstandet gelegen sein können. Es können also insbesondere mehrere Reihen von Verstärkungsteilen nebeneinander verlaufen.

Die Referenzrichtung hinsichtlich der Anordnung von Verstärkungsvorrichtungen 10 oder Verstärkungsteilen ist die Erstreckungsrichtung eines mittels einer Mehrzahl von Verstärkungsvorrichtungen 10 bzw. Verstärkungsteilen zu verstärkenden oder für Belastungsfälle zu stabilisierenden Bereichs. Dieser Bereich wird nachfolgend auch als Verstärkungsbereich oder Zwischenbereich Z bezeichnet. Insbesondere kann der zur verstärkende oder zu stabilisierende Bereich z. B. seitlich oder innerhalb und/oder entlang eines Anschlussbereichs eines Trägerteils wie einer Rippenanordnung oder entlang eines Randbereichs verlaufen und dabei ein Übergangsbereich von dem Anschlussbereich bzw. dem Randbereich in den flächigen Ersteckungsbereich der Beplankungsschale B sein, in dem Rissbildungen in der Kernschicht 13 aufgrund von sich in diesem Bereich ergebenden größeren Spannungen in der Kernschicht 13 vermieden oder lokal aufgehalten werden. Berechnungen und umfangreiche Versuche haben den positiven Effekt auch dieser erfindungsgemäßen Lösungsmaßnahme aufgezeigt.

Bei dem in der Figur 3 dargestellten Ausführungsbeispiel einer Anbringung der Beplankungsschale B an einer Rippenanordnung R und in den Figuren 5a, 5b, 9, 10a, 10b dargestellten Verstärkungsteilen sind diese jeweils schematisch als Strichlinie gestrichelt dargestellt, wobei im dargestellten Schnitt mit durchgezogenem Strich in der Schnittfläche befindliche Verstärkungsteile und mit gestricheltem Strich in einer von dieser Schnittebene beabstandeten Schnittebene angeordnete Verstärkungsteile dargestellt sind.

Generell können die sind Verstärkungsteile bzw. die Verstärkungsvorrichtungen entlang der genannten Referenz-Längsrichtung hintereinander und in einer Reihe oder in mehreren Reihen nebeneinander angeordnet sein. Bei dem in der Figur 3 dargestellten Ausführungsbeispiel sind Verstärkungsteile entlang der genannten Referenz-Längsrichtung und z. B. der Rippenanordnungs-Längsrichtung L-R hintereinander angeordnet. Dabei können die pinförmigen Elemente in einer geraden Linie hintereinander oder in der Rippenanordnungs-Längsrichtung L-R gesehen versetzt zueinander gelegen sein, d.h. auch einen Abstand zueinander quer zur Längserstreckung der Beplankungsschale B haben.

Bei diesem Ausführungsbeispiel der Figur 3 ist weiterhin vorgesehen, dass Verstärkungsteile 10a, 10b innerhalb von zwei Seitenbereichen Z1, Z2 der Beplankungsschale B angeordnet sind, die in Rippenanordnungs-Längsrichtung L-R und seitlich entlang der seitlichen Enden des Beplankungsschalen-Abschnitts 14 verlaufen und deren Breite sich jeweils quer zur Rippenanordnungs-Längsrichtung L-R und in der Längserstreckung der Beplankungsschale B erstreckt.

Alternativ oder zusätzlich kann vorgesehen sein, dass Verstärkungsteile 10a, 10b in einem Verstärkungsbereich eingebracht sind, die innerhalb des Beplankungsschalen-Abschnitts 14 und seitlich entlang der seitlichen Enden des Beplankungsschalen-Abschnitts 14 in die Kernschicht 13 gelegen sind. In der Figur 3 sind solche Gruppen von Verstärkungsteilen mit dem Bezugszeichen V3 und V4 bezeichnet.

Generell können die Ausführungsformen der erfindungsgemäßen Beplankungsschale B zur Beeinflussung von Schubspannungen und zur Vermeidung von Rissbildungen in der Kernschicht 13 eine Mehrzahl von zumindest in einem Verstärkungsbereich oder Zwischenbereich Z der Beplankungsschale B angeordneten Verstärkungs-Vorrichtungen 10 aufweisen, die jeweils aus einer Kombination von zumindest zwei in einem zusammenhängenden Volumenteil V (Figur 2) der Beplankungsschale B angeordneten Verstärkungsteilen gebildet sind. Der zumindest eine Zwischenbereich Z der Beplankungsschale B ist in Größe und Lage derart gewählt, dass dieser die gesamte Beplankungsschale B aufgrund der im gegebenen Anwendungsfall vorgesehenen äußeren Belastungen stabilisiert, indem die in dem jeweiligen Zwischenbereich Z aufgrund dieser Belastungen entstehenden Schubspannungen durch das Vorhandensein der Verstärkungsteile nicht zur Rissbildung in der Kernschicht 13 dieses Zwischenbereichs Z führen oder eine Rissbildung aufhalten. Dabei ist die Lage und Größe des zumindest einen Zwischenbereichs Z und die Art der Anordnung der Verstärkungsteile darin vorzugsweise so gewählt, dass nicht nur innerhalb, sondern auch außerhalb des Zwischenbereichs Z die Gefahr der Rissbildung in der Kernschicht 13 der Beplankungsschale B minimiert wird. Die Lage und Größe des zumindest einen Zwischenbereichs Z hängt dabei vom Anwendungsfall, d.h. der Gestalt des gesamten Strukturbauteils mit der Beplankungsschale B, mit den zugehörigen angenommenen äußeren Belastungen ab.

Nach einer Ausführungsform der Erfindung können die Verstärkungsteile der Verstärkungsvorrichtungen 10 gruppenweise angeordnet sein. Dabei kann insbesondere vorgesehen sein, dass die Verstärkungsteile 10a, 10b, 10c, 10d oder 10e, 10f einer Verstärkungs-Vorrichtung 10 gruppenweise in jeweils einem von mehreren Volumenteilen V der Beplankungsschale B angeordnet sind (Figur 2), wobei generell jede Gruppe von Verstärkungsteilen 10a, 10b, 10c, 10d oder 10e, 10f in jeweils einem fiktiven Volumenteil V jeweils aus einer Kombination von zumindest zwei Verstärkungsteilen 10a, 10b, 10c, 10d oder 10e, 10f gebildet ist. Somit sind in jeweils einem zusammenhängenden Volumenteil V der Beplankungsschale B eine Gruppe von Verstärkungsteilen angeordnet. Die Verstärkungsteile 10a, 10b, 10c, 10d oder 10e, 10f einer Gruppe derselben haben jeweils eine ähnliche Lage oder Orientierung innerhalb der Beplankungsschale B und haben jeweils mit einer Abweichung von maximal 30 Grad dieselbe Orientierung relativ zur Dickenrichtung D-B der Beplankungsschale B. Insbesondere kann weiterhin vorgesehen sein, dass die Ausrichtungen der Verstärkungsteile einer Gruppe relativ zu den weiteren Koordinatenrichtungen L-B, B-B der Beplankungsschale B zyklisch vorgesehen sind.

Ein Beispiel einer Gruppe von vier Verstärkungsteilen 10a, 10b, 10c, 10d mit einer untereinander zyklischen Orientierung ist in der Figur 2 dargestellt. In der Figur 2 ist ein Ausführungsbeispiel eines solchen fiktiven Volumenteils V in Form eines Quaders mit den Kantenlinien K dargestellt. Zur Orientierung ist in der Figur 2 auch die Längsrichtung L-Z des Zwischenbereichs Z sowie das Koordinatensystem der Beplankungsschale mit deren Koordinatenachsen L-B, B-B und D-B dargestellt. Die Anordnung der Verstärkungs-Vorrichtungen 10 ist insbesondere in der Längsrichtung L-Z des Zwischenbereichs Z hintereinander vorgesehen. In dem Ausführungsbeispiel nach der Figur 2 ist die dort dargestellte Verstärkungs-Vorrichtung 10 aus einer Kombination von vier Verstärkungsteilen 10a, 10b, 10c, 10d gebildet, wobei bei der Kombination der Verstärkungsteile 10a, 10b, 10c, 10d diese jeweils mit einer Abweichung von maximal 10 Grad dieselbe Orientierung in Bezug auf die Dickenrichtung D-B der Beplankungsschale B haben und wobei die Ausrichtungen der Verstärkungsteile in Bezug auf die weiteren Koordinatenrichtungen L-B, B-B der Beplankungsschale B zyklisch ist.

Dabei können die Verstärkungs-Vorrichtungen 10 oder eine Mehrzahl von Verstärkungs-Vorrichtungen 10 nach der Erfindung generell auf einer entlang, d.h. parallel oder winklig, zu der Referenzlinie oder der Rippenanordnungs-Längsrichtung L-R verlaufenden gedachten Linie hintereinander und/oder auch quer zur Rippen-Längsrichtung L-R gesehen versetzt zueinander gelegen sein.

In einem speziellen Fall kann eine Gruppe von Verstärkungsteilen aus zwei Verstärkungsteilen 10e, 10f gebildet sein, die in der genannten Referenz-Längsrichtung gesehen in etwa X-förmig zueinander angeordnet sind. Bei dieser Ausführungsform der Beplankungsschale B ist also zumindest ein Teil der Verstärkungs-Vorrichtungen 10 aus Paaren von Verstärkungsteilen 10a, 10b, 10c, 10d; 10e, 10f gebildet, deren Verstärkungsteile in Richtung einer Längserstreckung der Beplankungsschale B gesehen paarweise X-förmige Orientierungen aufweisen. Bei einer solchen Gruppe von X-förmigen Verstärkungsteilen können die beiden Verstärkungsteile voneinander beabstandet angeordnet sein oder auch aneinander anliegen oder als kreuzförmiges Gebilde in die Beplankungsschale B eingebracht sein. Beispielsweise sind mehrere Paare der auf jeweils einer der beiden Seiten Z1, Z2 gelegenen Verstärkungs-Vorrichtungen 10 derart zueinander orientiert, dass jeweils eines dieser Paare eine in der Rippenanordnungs-Längsrichtung L-R gesehen X-förmige Verstärkungsvorrichtung bildet.

Die Verstärkungs-Vorrichtungen 10 können in verschiedener Weise gestaltet und ausgeführt sein. Nach einem erfindungsgemäßen Ausführungsbeispiel ist vorgesehen, dass die Verstärkungs-Vorrichtungen 10 aus einer Mehrzahl von Kombinationen von pinförmigen Verstärkungsteilen 10e, 10f gebildet sind, die in der Rippenanordnungs-Längsrichtung L-R gesehen hintereinander gelegen sind, wobei jedes Paar von Verstärkungsteilen 10e, 10f in einem erfindungsgemäßen Volumenteil V angeordnet ist. Auch können ein Teil oder sämtliche der in einer Beplankungsschale B oder einem Bereich derselben eingebrachten Verstärkungsteile nadelförmig gestaltet sein. Weiterhin können die Verstärkungsteile an einem ihrer Enden oder an beiden ihrer Enden jeweils mit einer fußartigen Verbreiterung oder einem Haken versehen sein, die bzw. der zur Positionierung und/oder räumlichen Fixierung oder Verankerung innerhalb der Beplanungsschale B vorgesehen sein kann. Ein Vorteil dieser Gestaltung von Verstärkungsteilen kann darin liegen, dass bei dem Auftreten einer äußeren dynamischen Schadensbelastung die jeweiligen Verstärkungsteile in der Beplankungsschale B fixiert bleiben.

Alternativ dazu können die Verstärkungs-Vorrichtungen aus einer Mehrzahl von Kombinationen von plattenförmigen Verstärkungsteilen (nicht in den Figuren gezeigt) gebildet sein, die sich jeweils in ihrer ersten Längserstreckung zwischen dem zwischen dem inneren Hautabschnitt 11 und dem äußeren Hautabschnitt 12 erstrecken und sich durch die zwischen diesen gelegenen schublast-aufnehmenden Kernschicht 13 hindurch erstrecken. Diese plattenförmigen Verstärkungsteile erstrecken sich in ihrer senkrecht zu der ersten Längserstreckung verlaufenden Längserstreckung in der Rippenanordnungs-Längsrichtung L-R.

Die z. B. pinförmigen oder plattenförmigen Verstärkungsteile 10e, 10f insbesondere von jeweiligen Paaren derselben können dabei aneinander anliegen. Auch können pinförmigen oder plattenförmigen Verstärkungsteile 10e, 10f insbesondere von jeweiligen Paaren derselben in der Rippenanordnungs-Längsrichtung L-R voneinander beabstandet sein. Nach einem Ausführungsbeispiel kann dabei vorgesehen sein, dass der Abstand der pinförmigen oder plattenförmigen Verstärkungsteile 10e, 10f jeweils eines Paares derselben maximal das 1,5-fache Dicke der Beplankungsschale B an der jeweiligen Stelle beträgt.

Bei der Ausbildung der Verstärkungs-Vorrichtungen als plattenförmige Verstärkungsteile können zwei oder mehrere derselben auch in der Rippenanordnungs-Längsrichtung L-R gesehen jeweils ineinander greifend angeordnet sind.

Bei den Ausführungen der Verstärkungsteile und/oder Verstärkungs-Vorrichtungen 10 nach der Erfindung können die Verstärkungsteile und/oder Verstärkungs-Vorrichtungen 10 oder eine Mehrzahl derselben sich auch durch den inneren Hautabschnitt 11 und dem äußeren Hautabschnitt 12 hindurch erstrecken oder in diesen jeweils mit einem Endabschnitt verankert sein. Alternativ oder zusätzlich können Verstärkungs-Vorrichtungen 10 oder eine Mehrzahl derselben mit ihren jeweiligen den Hautabschnitten zugewandten Endabschnitten an dem inneren Hautabschnitt 11 und dem äußeren Hautabschnitt 12 anliegen oder in einem Abstand zu diesen jeweils enden.

Generell kann vorgesehen sein, dass zumindest ein Teil der Verstärkungs-Vorrichtungen 10; 10a, 10b, 10c, 10d; 10e, 10f derart in der Beplankungsschale B angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figur 11) und/oder der äußere Hautabschnitt 12 oder 52 (Figur 11) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Die Verstärkungsteile können nach der Erfindung generell aus einem metallischen Material und/oder aus einem nicht-metallischen Material und insbesondere aus einem Faserverbund-Kunststoff gebildet sein. Als nicht-metallisches Material kann Carbon, Fiberglas, Quarz, Kevlar und/oder Keramik verwendet werden.

Nach einer weiteren Ausführungsform des erfindungsgemäßen Strukturbauteils weist die schublast-aufnehmende Kernschicht 13 zumindest einen Kernschicht-Verstärkungsbereich 37 und vorzugsweise eine Mehrzahl von Kernschicht-Verstärkungsbereichen 37 auf (Figur 4), mit der bzw. mit denen mehrere in der Längserstreckung der schublast-aufnehmenden Kernschicht 33 oder der Schaumschicht nebeneinander angeordnete schublast-aufnehmenden Kernschicht-Abschnitte 33a verbunden werden. Jeder Kernschicht-Verstärkungsbereich 37 erstreckt sich in einer Längsrichtung L-V (Figur 3) quer zur Längserstreckung der schublast-aufnehmenden Kernschicht 13 durch diesen hindurch und verläuft dabei zwischen dem inneren Hautabschnitt 11 und dem äußeren Hautabschnitt 12. In der Figur 3 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind. In der Ausführungsform des Strukturbauteils nach der Figur 3 sind die Verläufe der Kernschicht-Verstärkungsbereiche 37 derart vorgesehen, dass sich rechteckige schublast-aufnehmende Kernschicht-Abschnitte 33a ergeben oder dass sich umgekehrt die Kernschicht aus Kernschicht-Abschnitten 33a zusammensetzt, die über Kernschicht-Verstärkungsbereiche 37 miteinander verbunden sind. Dabei kann insbesondere vorgesehen sein, dass der Kernschicht-Verstärkungsbereich 37 mit dem inneren Hautabschnitt 11 und dem äußeren Hautabschnitt 12 verbunden ist, so dass der Kernschicht-Verstärkungsbereich 37 an dem inneren Hautabschnitt 11 und dem äußeren Hautabschnitt 12 befestigt sind.

Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Durch in dem Kernschicht-Verstärkungsbereich 37 eingebrachte Verstärkungsvorrichtunge 10 kann die Übertragung einer Beschädigung der Beplankungsschale B insbesondere in Form von Rissen in der schublastaufnehmenden Kernschicht von einer Seite des Kernschicht-Verstärkungsbereichs 37 auf die jeweils andere Seite des Kernschicht-Verstärkungsbereichs 37 effektiver verhindert oder aufgehalten werden.

Der Verstärkungsbereich ist aus einem Material gebildet, das eine mindestens zweifache Steifigkeit aufweist als die schublastaufnehmende Kernschicht 13. Dabei kann der Kernschicht-Verstärkungsbereich 37 insbesondere aus Harz gebildet sein.

Bei einer erfindungsgemäßen Ausführungsform der Beplankungsschale B mit einer Rippen-Anordnung R kann auch vorgesehen sein, dass mehrere nach einer Ausführungsform der Erfindung ausgeführte und entlang der Rippenanordnungs-Längsrichtung L-R hintereinander gelegene Verstärkungsteile 10 den zumindest einen Kernschicht-Verstärkungsbereich 37 jeweils durchragen. Der Kernschicht-Verstärkungsbereich 37 kann sich insbesondere in seiner Längsrichtung entlang der Rippenanordnungs-Längsrichtung L-R und entlang eines Abschnitts oder entlang der gesamten Länge der Rippen-Anordnung R erstrecken. Der Kemschicht-Verstärkungsbereich 37 kann dabei parallel oder winklig zur Rippenanordnungs-Längsrichtung L-R verlaufen. Zumindest ein Kernschicht-Verstärkungsbereich 37 mit an diesem angeordneten Verstärkungsteilen und/oder Verstärkungsvorrichtungen kann insbesondere in zumindest einem der zwei in Rippenanordnungs-Längsrichtung L-R verlaufenden Seitenbereiche Z1, Z2 vorgesehen sein.

An derartigen Verstärkungsbereichen 37 kann eine Mehrzahl von Verstärkungsvorrichtungen 10 nach einer Ausführungsform der Erfindung angeordnet sein. In der Figur 7 ist ein Ausführungsbeispiel dargestellt, bei der eine Anordnung oder ein Paar von Verstärkungsteilen 10 bzw. 10e, 10f in einer X-förmigen Anordnung einen Kernschicht-Verstärkungsbereich 37 durchragen, wobei jeweils ein Mittelabschnitt eines Verstärkungsteile 10e, 10f innerhalb des Kernschicht-Verstärkungsbereichs 17 gelegen ist. In der Figur 7 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 37 als Referenz-Längsrichtung hintereinander angeordnet sind und dabei aneinander anschließend oder anliegend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. Bei der hierin bezeichneten "X-förmigen" Anordnung von Verstärkungsteilen sind diese insbesondere in der jeweiligen Referenz-Längsrichtung beabstandet voneinander angeordnet, so dass in den Figuren 7 und 8 sowie auch in den Figuren 9, 10a und 10b eine der Verstärkungsvorrichtung des jeweils dargestellten Paars von Verstärkungsteilen und/oder Verstärkungsvorrichtungen gestrichelt gezeichnet ist, um anzuzeigen, dass sich diese Verstärkungsvorrichtung hinter der jeweiligen Zeichenebene befindet. In der Figur 8 sind die zwei Verstärkungsteile einer X-förmigen Anordnung derselben mit den Bezugszeichen 10e und 10f versehen. In der Darstellung der Figur 8 verläuft die Längsrichtung des Kernschicht-Verstärkungsbereichs 37 vom Betrachter der Figur 8 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 37. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der einfachen Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kernschicht-Verstärkungsbereichs 37 gelegen sein.

Insbesondere bei einer X-förmigen Anordnung von jeweils zwei Verstärkungsteilen kann insbesondere vorgesehen sein, dass die zwei Verstärkungsteile 10 10f aneinander anliegen oder dass die zwei Verstärkungsteiles 10e, 10f an ihren jeweils mittleren Abschnitten miteinander verbunden sind. So kann z. B. eines der Verstärkungsteile 10e, 10f eine Aufnahme wie z. B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht 13 auftretende Schubspannungen aufzunehmen und/oder darin auftretende Risse aufzuhalten oder zu verhindern. Die an Hand der Figuren 7 und 8 beschriebenen Ausführungsbeispiele der Erfindung bewirken, dass sich Schäden in der schublastaufnehmenden Kernschicht 13, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Generell können die Anordnung und/oder Gestaltung der Verstärkungsteile und/oder Verstärkungs-Vorrichtungen für die verschiedenen Aspekte der Erfindung gleich ausgeführt sein. Generell kann vorgesehen sein, dass zumindest ein Teil der Verstärkungs-Vorrichtungen 10; 10a, 10b, 10c, 10d; 10e, 10f derart im Kernschicht-Endbereich 56 angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figuren 6 bis 10) und/oder der äußere Hautabschnitt 12 oder 52 (Figuren 6 bis 10) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Alternativ oder zusätzlich kann vorgesehen sein, dass mehrere Verstärkungsteile 10; 10a, 10b, 10c, 10d; 10e, 10f den Verstärkungsbereich 37 jeweils zumindest teilweise durchragen. Dabei kann insbesondere vorgesehen sein, dass jeweils ein Ende F2 eines Verstärkungsteils den Verstärkungsbereich 37 durchragt oder in diesen eingesetzt ist (Figuren 4, 5 und 8).

Wie in den Figuren 9, 10a und 10b dargestellt ist, können in der Beplankungsschale B mit oder ohne Verstärkungsbereich 37 entlang einer Referenz-Längsrichtung eine Mehrzahl von Verstärkungsvorrichtungen angeordnet sein, wobei jede Verstärkungsvorrichtung aus eine Gruppe von Verstärkungsteilen 10a, 10b, die insbesondere eine X-förmige Anordnung haben, gebildet sei kann. Dabei kann eine Mehrzahl von X-förmig angeordneten Verstärkungsteil-Paaren in der Referenz-Längsrichtung hintereinander angeordnet sein (Figur 9). Wie diese in der Figur 10a und 10b gezeigt ist, können auch mehrere Reihen von derartige Verstärkungsvorrichtungen 10 angeordnet sein, wobei die Reihen von Verstärkungsvorrichtungen quer zur Referenz-Längsrichtung gesehen nebeneinander angeordnet sind. In der Figur 10b ist gezeigt, dass nebeneinander angeordnete Reihen von Verstärkungsvorrichtungen 10-1, 10-2 diese derart angeordnet ausgeführt sein können, dass sich die Längserstreckung von Verstärkungsteilen, deren Enden aufeinander zulaufen, in der Referenz-Längsrichtung gesehen einander überlappen.

Nach einem Aspekt der Erfindung ist ein Strömungskörper mit einem Strukturbauteil nach einer der beschriebenen Ausführungsformen vorgesehen. Das Strukturbauteil ist nach der Erfindung ein hauptlast-tragendes Strukturteil und somit ist auch die Beplankungsschale wie auch die Rippen-Anordnung eine hauptlast-tragende Strukturteil-Komponente.

Ein weiterer Aspekt der Erfindung bezieht sich auf den sich flächig zwischen Rippen-Anordnungen R erstreckenden Bereich der Beplankungsschale B und wird nachfolgend an Hand der in den Figuren 6a und 6b dargestellten Ausführungsbeispiele beschrieben. Danach ist ein Strukturbauteil 1 eines Strömungskörpers mit zumindest einer Beplankungsschale B zur Bildung einer Strömungsfläche an der Außenseite des Strukturbauteils 1 und einer Trägerstruktur T zur Befestigung der jeweiligen Beplankungsschale B vorgesehen, wobei die Beplankungsschale B - wie voranstehend beschrieben an Hand der Figuren 1 bis 5 beschrieben ist - als Sandwich und aus einem inneren Hautabschnitt 31, einem äußeren Hautabschnitt 32 sowie einer zwischen diesen gelegenen schublastaufnehmende Kernschicht 33 oder einer Schaumschicht gebildet ist, der den inneren und den äußeren Hautabschnitt 31, 32 flächig miteinander verbindet (Figuren 7, 8). Dabei ist die sich zwischen den Trägerbauteilen T und der Rippen-Anordnung R erstreckende und zwischen dem inneren und dem äußeren Hautabschnitt 31, 32 gelegene schublast-aufnehmende Kernschicht 33 aus mehreren in der Längserstreckung der schublast-aufnehmenden Kernschicht 33 oder der Schaumschicht nebeneinander angeordneten schublastaufnehmenden Kernschicht-Abschnitten 33a gebildet. Die schublast-aufnehmenden Kernschicht-Abschnitte 33a sind miteinander jeweils an den einander anliegenden Seiten durch einen Kernschicht-Verstärkungsbereich 37 verbunden, der sich in seiner Längsrichtung L-V (Figuren 6a, 6b) quer zur Längserstreckung der schublastaufnehmende Kernschicht 33 durch diesen hindurch erstreckt.

Der Verlauf der Kernschicht-Verstärkungsbereiche 37 in der Längserstreckung der Beplankungsschale B und somit der Kernschicht-Abschnitte 33a können verschiedenartig vorgesehen sein. Die Kernschicht-Abschnitte 33a entsprechend dem Verlauf der Kemschicht-Verstärkungsbereiche 37 in der Längserstreckung der Beplankungsschale B sind bei der Ausführungsform nach der Figur 6a schachbrettartig und bei der Ausführungsform nach der Figur 6b gegenüber einer Schachbrett-Anordnung in einer Längsrichtung versetzt zueinander angeordnet. Generell verlaufen die Kernschicht-Verstärkungsbereiche 37 in der Längserstreckung der Beplankungsschale B gesehen derart, dass diese auf einen Seitenrand oder auf eine Ecke von quaderförmig vorgesehenen Kernschicht-Abschnitten 33a auftreffen.

Der Kernschicht-Verstärkungsbereich 37 kann dabei zwischen dem inneren Hautabschnitt 31 und dem äußeren Hautabschnitt 32 verlaufen. Dabei kann insbesondere vorgesehen sein, dass der Kernschicht-Verstärkungsbereich 37 mit dem inneren Hautabschnitt 31 und dem äußeren Hautabschnitt 32 verbunden ist, so dass der Kernschicht-Verstärkungsbereich 37 an dem inneren Hautabschnitt 31 und dem äußeren Hautabschnitt 32 befestigt sind. Der Kemschicht-Verstärkungsbereich 37 kann insbesondere aus einem Material gebildet sein, das eine mindestens zweifache Steifigkeit aufweist als der Kernschicht-Verstärkungsbereich 37. Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Der Kernschicht-Verstärkungsbereich 37 kann insbesondere aus Harz gebildet sein. In der Figur 6 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind.

In diesem Zusammenhang kann die Trägerstruktur T insbesondere aus zumindest zwei jeweils entlang einer Längsrichtung L-S des Strukturbauteils 1 verlaufenden Trägerbauteilen 5, 6 (nicht in der Figur 6 gezeigt) und zumindest einer mit der Beplankungsschale B verbundenen Rippen-Anordnung R zur flächigen Abstützung der Beplankungsschale B an der Trägerstruktur T gebildet sein (Figuren 1a, 1b).

Die Rippen-Anordnung R kann insbesondere in Bezug auf ihren Querschnitt T-förmig gestaltet sein. Ein Ausführungsbeispiel einer erfindungsgemäßen Rippen-Anordnung R ist in der Figur 2 dargestellt und weist auf: eine Rippe 21 und ein daran anschließendes Flanschteil 22, das mit einem Oberflächenbereich der Beplankungsschale B verbunden und an diesem befestigt ist. Die Länge des Flanschteils 22 erstreckt sich in einer Rippenanordnungs-Längsrichtung L-R und die Breite des Flanschteils 22 verläuft in einer Rippenanordnungs-Querrichtung Q-R, wobei die Rippe 21 von dem Flanschteil 22 in einer Rippenanordnungs-Breitenrichtung B-R absteht, die senkrecht zu der Rippenanordnungs-Längsrichtung L-R und der Rippenanordnungs-Querrichtung Q-R gerichtet ist (Figur 3).

Die Trägerbauteile 5, 6 können insbesondere nach Ausführungsbeispielen gebildet sein, die an Hand der Figuren 1 und 2 beschrieben worden sind.

In der Ausführungsform des Strukturbauteils nach der Figur 6 sind die Verläufe der Kernschicht-Verstärkungsbereiche 37 derart vorgesehen, dass sich rechteckige Schublastaufnehmende Kernschicht-Abschnitte 33a ergeben. Dabei sind mehrere Kernschicht-Verstärkungsbereiche 37-1, 37-2, 37-3 vorgesehen, die entlang der Rippenanordnungs-Längsrichtung L-R verlaufen. In Bezug auf den Ausdruck "entlang" kann hierbei insbesondere vorgesehen sein, dass zwischen der Orientierung der in der Rippenanordnungs-Längsrichtung L-R verlaufenden Kernschicht-Verstärkungsbereiche 37-1, 37-2, 37-3 eine lokale Winkelabweichung von maximal 30 Grad gegenüber der Orientierung der lokalen Rippenanordnungs-Längsrichtung L-R oder der Längsrichtung der Rippen-Anordnung R auftritt. Die Kernschicht-Verstärkungsbereiche 37 können krummlinig oder geradlinig verlaufen. In der Figur 5 ist die schublast-aufnehmende Kernschicht-Längsrichtung L-V beispielartig nur für einen Kernschicht-Verstärkungsbereich 37 eingetragen. Weiterhin sind quer zu den in der Rippenanordnungs-Längsrichtung L-R verlaufenden Kernschicht-Verstärkungsbereiche 37-1, 37-2, 37-3 verlaufende Kernschicht-Verstärkungsbereiche 37-4 vorgesehen.

Somit sind zur Bildung der Beplankungsschale B insbesondere schublastaufnehmende Kernschicht-Abschnitte 33a

Nach einem Ausführungsbeispiel des erfindungsgemäßen Strukturbauteils ist vorgesehen, dass in der schublast-aufnehmenden Kernschicht 33 entlang eines Umgebungsbereichs Z einer Mehrzahl von Kernschicht-Verstärkungsbereichen 37 der Beplankungsschale B erfindungsgemäße Verstärkungs-Vorrichtungen integriert sind (in der Figur 6 ist beispielsweise ein derartiger Umgebungsbereich oder Zwischenbereich mit dem Bezugszeichen Z versehen). Dabei sind die Verstärkungs-Vorrichtungen 10 in der Längsrichtung L-V des Verstärkungsbereichs oder entlang der Längsrichtung des Zwischenbereichs Z hintereinander angeordnet. Dabei kann in einer sich zwischen jeweils zwei Rippen-Anordnungen R erstreckenden Beplankungsschale B vorgesehen sein, dass entlang und auf beiden Seiten der darin verlaufenden Kemschicht-Verstärkungsbereichen 37 in den schublast-aufnehmende Kernschicht 33 der Beplankungsschale B Verstärkungs-Vorrichtungen 10 integriert sind. Generell kann sich der Umgebungsbereich Z für die Anordnung der Verstärkungs-Vorrichtungen 10 sich entlang von dessen Längserstreckung auf beiden Seiten des Kernschicht-Verstärkungsbereichs 37 und bis zu einer Entfernung von maximal der doppelten Dicke der Beplankungsschale B an der jeweiligen Stelle des Kernschicht-Verstärkungsbereichs 37 erstreckt.

Die Verstärkungsteile und/oder Verstärkungs-Vorrichtungen 10 können zusammen mit dem Kernschicht-Verstärkungsbereich 33 in der Beplankungsschale B integriert sein, wie dies voranstehend an Hand der Figuren 2 und 3 beschrieben ist, so dass für Komponenten ähnlicher Funktion dieselben Bezugszeichen verwendet werden. In den Figuren 6 und 7 sind zwei Ausführungsformen von neben und entlang von Kernschicht-Verstärkungsbereichen 37 angeordneten Verstärkungs-Vorrichtungen 10 dargestellt. Die Ausführungsformen der in den Figuren 7 und 8 dargestellten Verstärkungsvorrichtungen 10 und deren Anordnung sind analog der Verstärkungsvorrichtungen 10 und deren Anordnung ausgeführt, wie sie in den Figuren 2 bzw. 3 dargestellt sind. Die Ausgestaltung und Anordnung der Verstärkungsvorrichtungen 10 oder der Verstärkungsteile kann wie in der an Hand der Figuren 3 und 4 beschriebenen Ausführungsformen vorgesehen sein.

In diesem Zusammenhang kann erfindungsgemäß insbesondere vorgesehen sein, dass mehrere nach einer Ausführungsform der Erfindung ausgeführte und entlang der Verstärkungsbereich -Längsrichtung L-V hintereinander gelegene Verstärkungsteile 10 den Kernschicht-Verstärkungsbereich 37 jeweils durchragen. In der Figur 8 ist ein Ausführungsbeispiel dargestellt, bei der eine Anordnung oder ein Paar von Verstärkungsteilen 10e, 10f in einer X-förmigen Anordnung einen Kernschicht-Verstärkungsbereich 37 durchragen, wobei jeweils ein Mittelabschnitt eines Verstärkungsteils 10 innerhalb des Kernschicht-Verstärkungsbereichs 37 gelegen ist. Alternativ oder zusätzlich können Verstärkungsteile 10 auch in der Verstärkungsbereich -Längsrichtung L-V gesehen neben dem Kernschicht-Verstärkungsbereich 37 gelegen sein. In den Figuren 7 und 8 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 17 hintereinander angeordnet sind und dabei aneinander anschließend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 37 und in Bezug auf dieser einander gegenüber liegend jeweils eine X-förmige Anordnung oder ein Paar 10-1, 10-2 von Verstärkungsteilen 10 angeordnet ist. In der Figur 8 sind die zwei Verstärkungsteile einer X-förmigen Anordnung derselben mit den Bezugszeichen 10e und 10f versehen. In der Darstellung der Figur 8 verläuft die Längsrichtung L-V des Kernschicht-Verstärkungsbereichs 17 vom Betrachter der Figur 6 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kernschicht-Verstärkungsbereichs 37 gelegen sein.

Die an Hand der Figuren 7 bis 10b beschriebenen Ausführungsbeispielen der Erfindung bewirken, dass sich Schäden im Schublastaufnehmende Kernschicht 33, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Ein weiterer Aspekt der Erfindung bezieht sich auf eine hauptlast-tragende Beplankungsschale B für ein Strukturbauteil 1, die in ihrem sich flächig erstreckenden Innenbereich 50 als Sandwich-Bauteil derart gebildet ist, wie dies voranstehend an Hand der Figuren 1 bis 5 und 5 bis 7 beschrieben ist. Dieser Aspekt der Erfindung wird nachfolgend an Hand der Figuren 9 und 10 beschrieben, die im Innenbereich 50 der Beplankungsschale B zeigt: die als Sandwich-Bauteil ausgeführte Beplankungsschale B mit einem inneren Hautabschnitt 51, einem äußeren Hautabschnitt 52 sowie einem zwischen diesen gelegenen schublast-aufnehmende Kernschicht 53, der den inneren 51 und den äußeren 52 Hautabschnitt flächig miteinander verbindet. Die Eigenschaften dieser Strukturkomponenten sind wie vorstehend beschrieben. Bei der Darstellung der Figuren 9 und 10 werden für einige Bestandteile und Komponenten der jeweils dargestellten Ausführungsform dieselben Bezugszeichen wie in vorgehenden Figuren verwendet, wenn auf die jeweiligen Funktionalitäten oder Eigenschaften Bezug genommen wird.

Die Beplankungsschale B ist zum Anbringen derselben an ein Träger-Bauteil mit einem äußeren Randabschnitt 60 mit einem äußeren Rand 61 ausgebildet, der aufweist: einen entlang des Rands 61 verlaufenden kernschichtfreien Anschlussbereich 63 mit dem inneren Hautabschnitt 51, dem äußeren Hautabschnitt 52 und einer zwischen diesen gelegenen monolithischen Zwischenschicht 65. In dem äußeren Randabschnitt 60 ist ein Übergangsbereich 62 vorgesehen, in dem von dem Innenbereich 50 aus gesehen die schublast-aufnehmende Kernschicht 63 endet, d.h. in dem der äußere Rand 55 der schublast-aufnehmende Kernschicht 53 gelegen ist oder verläuft. Aus dem Vergleich der Figuren 8 und 9 ist entnehmbar, dass der Rand 61 bzw. der Rand 55 entlang der Längsrichtung L-S des Strukturbauteils 1 verläuft und sich der Anschlussbereich 63 von dem Innenbereich 50 aus in der Breitenrichtung B-S des Strukturbauteils 1 erstreckt. In dem Übergangsbereich 62 kann ein Bereich 66 vorgesehen sein, in dem sich die Dicke der monolithischen Zwischenschicht in Richtung zum äußeren Rand 61 zur Verringerung der Querschnittsdicke der Beplankungsschale verringert.

Erfindungsgemäß ist vorgesehen, dass in einem Kernschicht-Endbereich 56 entlang des äußeren Randabschnitts 60 der Beplankungsschale B Verstärkungs-Vorrichtungen 10 integriert sind, die die schublast-aufnehmende Kernschicht 53 durchragen.

Die Verstärkungsvorrichtung kann wie an Hand der Figuren 4 und 5 oder 7 und 8 beschrieben ausgeführt sein. Dabei kann insbesondere eine X-Anordnung von Verstärkungsteilen 10e, 10f verwendet werden. In der Figur 9 sind zwei in der Breitenrichtung B-S des Strukturbauteils 1 hintereinander angeordnete X-Anordnungen 10-1 und 10-2 angeordnet. Generell können in der Breitenrichtung B-S des Strukturbauteils 1 gesehen zumindest ein Verstärkungsteil 10 und insbesondere zumindest eine X-Anordnung von Verstärkungsteilen 10 angeordnet sein. Vorzugsweise sind in der Längsrichtung L-S des Strukturbauteils 1, also entlang des Rands 55 der schublast-aufnehmenden Kernschicht 33 mehrere Verstärkungsvorrichtungen 10 bzw. 10-1 und/oder 10-2 angeordnet.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 17 hintereinander gelegene X-förmige Anordnungen 10-1, 10-2 angeordnet sind, wobei auf beiden Seiten des Kernschicht-Verstärkungsbereichs 17 hintereinander gelegene X-förmige Anordnungen 10-1, 10-2 angeordnet sind. In der Figur 5 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. In der Figur 5 sind die zwei Verstärkungsteile einer X-förmigen Anordnung derselben mit den Bezugszeichen 10e und 10f versehen. In der Darstellung der Figur 9 verläuft die Längsrichtung des Kernschicht-Verstärkungsbereichs 17 vom Betrachter der Figur 9 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 17 gelegenen Enden der Verstärkungsteile einen Bereich des Kernschicht-Verstärkungsbereichs 17. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 17 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 17 gesehen abwechselnd auf der einen und der dieser gegenüberliegenden anderen Seite des Kernschicht-Verstärkungsbereichs 17 gelegen sein.

Bei einer X-förmigen Anordnung von jeweils zwei Verstärkungsteilen kann insbesondere vorgesehen sein, dass die zwei Verstärkungsteile 10e, 10f aneinander anliegen oder dass die zwei Verstärkungsteiles 10e, 10f an ihren jeweils mittleren Abschnitten miteinander verbunden sind. So kann z. B. eines der Verstärkungsteile 10e, 10f eine Aufnahme wie z. B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht auftretende Schubspannungen aufzunehmen.

Die an Hand der Figuren 3 und 3b, 4b beschriebenen Ausführungsbeispiele der Erfindung bewirken, dass sich Schäden in der schublast-aufnehmenden Kernschicht 13, falls diese auf einer ersten der Seiten des Kernschicht-Verstärkungsbereichs 17 auftreten, nicht durch über den Kernschicht-Verstärkungsbereichs 17 zu einer zweiten, der ersten Seite gegenüber liegenden Seite hinüberwandern kann.

Die Beplankungsschale B nach diesem Aspekt der Erfindung kann insbesondere von einer Trägerstruktur T aufgenommen und an dieser befestigt sein, wie es in den Figuren 1a, 1b und 2 bzw. der Figuren 5a, 5b, 5c dargestellt ist. Bei diesem Aspekt der Erfindung kann insbesondere auch vorgesehen sein, dass sich die Beplankungsschale B zwischen Trägerbauteilen 5, 6 und der Rippen-Anordnung R erstreckt, wie dies an Hand der Figuren 1 a und 1 b voranstehend beschrieben worden ist. Optional kann dabei alternativ oder zusätzlich vorgesehen sein, dass die schublast-aufnehmende Kernschicht 53 aus mehreren in der Längserstreckung der schublast-aufnehmenden Kernschicht 53 nebeneinander angeordneten schublast-aufnehmende Kernschicht-Abschnitten (nicht in der Figur 9 oder 10 gezeigt) gebildet ist, wie dies an Hand der Figuren 3 bis 8 beschrieben worden ist. Die schublast-aufnehmende Kernschicht-Abschnitte sind dabei - wie an Hand der Figur 6 beschrieben - miteinander jeweils an den einander anliegenden Seiten durch einen Kernschicht-Verstärkungsbereich 37 verbunden, der sich in der Längsrichtung L-V des Verstärkungsbereichs (Figur 6) quer zur Längserstreckung der schublast-aufnehmenden Kernschicht 33 bzw. 63 durch diesen hindurch erstreckt.

Erfindungsgemäß kann weiterhin vorgesehen sein, dass von dem Innenbereich 60 aus gesehen vor dem schublast-aufnehmenden kernschichtfreien Anschlussbereich 63 ein Zwischenbereich 62 vorgesehen ist, in dem sich die Dicke der schublast-aufnehmenden Kernschicht 53 in Richtung zum Rand 55 kontinuierlich verringert unter Ausbildung eines keilförmigen Abschnitts der monolithischen Zwischenschicht 65 zumindest zwischen der dem äußeren Hautabschnitt 52 zugewandten Seite der schublast-aufnehmenden Kernschicht 53 und dem äußeren Hautabschnitt 52 oder zwischen der dem inneren Hautabschnitt 51 zugewandten Seite der schublast-aufnehmenden Kernschicht 53 und dem inneren Hautabschnitt 51. Bei dieser Ausführungsbeispiel kann insbesondere vorgesehen sein, dass in einem Kernschicht-Endbereich 56 entlang des äußeren Randabschnitts 30 der Beplankungsschale B Verstärkungs-Vorrichtungen 10; 10e, 10f nach einem hierin beschriebenen Ausführungsbeispiel integriert sind, die die schublast-aufnehmende Kernschicht und teilweise die beiden keilförmigen Abschnitte der monolithischen Zwischenschicht 65 durchragen.

Der Kernschicht-Endbereich 56 für die Anordnung der Verstärkungs-Vorrichtungen kann sich von dem Rand des Kernschichtendes aus bis zu einer Entfernung von maximal der vierfachen Dicke der Beplankungsschale B am Rand des Kernschichtendes erstreckt.

Generell können die Anordnung und/oder Gestaltung der Verstärkungsteile und/oder Verstärkungs-Vorrichtungen für die verschiedenen Aspekte der Erfindung gleich ausgeführt sein.

## Patentansprüche

1. Hauptlast-tragende Beplankungsschale (B) für ein Strukturbauteil (1) eines Strömungskörpers, wobei die Beplankungsschale (B) als Sandwich und aus einem inneren Hautabschnitt (11, 31, 51), einem äußeren Hautabschnitt (12, 32, 52) sowie einer zwischen diesen gelegenen Schublast-auf- nehmende Kernschicht (33) gebildet ist, die den inneren und den äußeren Hautabschnitt (11, 31, 51; 12, 32, 52) flächig miteinander verbindet, wobei in der Beplankungsschale (B) in der Kernschicht mehrere Verstärkungs-Vorrichtungen (10; 10a, 10b, 10c, 10d; 10e, 10f) integriert sind, die jeweils zumindest 85 % der Schublast-aufnehmenden Kernschicht (13) in deren Dickenrichtung durchragen, um die Rissfestigkeit der Beplanküngsschale (B) zu verbessern und/oder eine Eingrenzung vorhandener oder entstehender Schäden zu erreichen,
**dadurch gekennzeichnet,**
**dass** die Schublast-aufnehmende Kernschicht (33) aus mehreren in der Längserstreckung der Schaumschicht nebeneinander angeordneten Kernschicht-Abschnitten (33a) gebildet ist, die jeweils an den einander anliegenden Seiten durch einen Kernschicht-Verstärkungsbereich (37) miteinander verbunden sind, der sich quer zur Längserstreckung der Kernschicht (33) durch diese hindurch erstreckt, wobei der Verstärkungsbereich (37) aus einem Material gebildet ist, das eine mindestens zweimal so große Steifigkeit aufweist wie die Schublast-aufnehmende Kernschicht (33), und dass mehrere Verstärkungsteile (10; 10a, 10b, 10c, 10d; 10e, 10f) den Verstärkungsbereich (37) jeweils zumindest teilweise durchragen.

2. Hauptlast-tragende Beplankungsschale (B) nach Anspruch 1,
**dadurch gekennzeichnet, dass** der Kernschicht-Verstärkungsbereich (37) aus Harz gebildet ist.

3. Hauptlast-tragende Beplankungsschale (B) nach Anspruch 1 oder 2, **dadurch gekennzeichnet, dass** Verstärkungsteile (10; 10a, 10b, 10c, 10d; 10e, 10f) mit einem Ende in den Verstärkungsbereich (37) eingesetzt sind und sich mit ihrem übrigen Bereich in der Schublast-aufnehmenden Kernschicht (33) erstrecken.

4. Hauptlast-tragende Beplankungsschale (B) nach einem der Ansprüche 1 bis 3, **dadurch gekennzeichnet, dass** entlang eines Umgebungsbereichs (Z) einer Mehrzahl von Kernschicht-Verstärkungsbereichen (37) in der Schublastaufnehmenden Kernschicht (33) der Beplankungsschale (B) Verstärkungs-Vorrichtungen (10) integriert sind.

5. Hauptlast-tragende Beplankungsschale (B) nach Anspruch 4, **dadurch gekennzeichnet, dass** der Umgebungsbereich (Z) für die Anordnung der Verstärkungs-Vorrichtungen (10) sich auf beiden Seiten des Kernschicht-Verstärkungsbereichs (37) bis zu einer Entfernung von maximal der zehnfachen Dicke der Beplankungsschale (B) an der jeweiligen Stelle des Kernschicht-Verstärkungsbereichs (37) erstreckt.

6. Hauptlast-tragende Beplankungsschale (B) nach einem der Ansprüche 1 bis 5, **dadurch gekennzeichnet, dass** mehrere Reihen von Verstärkungsteilen hintereinander in der Längsrichtung entlang eines Umgebungsbereichs (Z) zumindest eines Kernschicht-Verstärkungsbereichs (37) angeordnet sind, wobei die Reihen von Verstärkungsteilen derart angeordnet sind, dass sich deren Verstärkungsteile in Richtung der Längserstreckung des äußeren Randabschnitts (60) der Beplankungsschale (B) gesehen ineinander kämmen.

7. Hauptlast-tragende Beplankungsschale (B) nach einem der Ansprüche 1 bis 6, **dadurch gekennzeichnet, dass** der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

8. Hauptlast-tragende Beplankungsschale (B) nach einem der Ansprüche 1 bis 7, **dadurch gekennzeichnet, dass** der innere Hautabschnitt (11, 31, 51; 12) und/oder der äußere Hautabschnitt (12, 32, 52) jeweils aus mehreren Hautlagen gebildet ist.

9. Hauptlast-tragende Beplankungsschale (B) nach einem der Ansprüche 1 bis 8, **dadurch gekennzeichnet, dass** zumindest ein Teil der Verstärkungs-Vorrichtungen (10; 10a, 10b, 10c, 10d; 10e, 10f) derart angeordnet ist, dass deren Enden (F1) den inneren Hautabschnitt (11, 31, 51) und/oder den äußeren Hautabschnitt (12, 32, 52) jeweils zumindest teilweise durchragen.

10. Hauptlast-tragende Beplankungsschale (B) nach einem der Ansprüche 1 bis 9, **dadurch gekennzeichnet, dass** Verstärkungsteile (10; 10a, 10b, 10c, 10d; 10e, 10f) in der Beplankungsschale (B) in jeweils in einem Volumenteil (V) der Beplankungsschale (B) gelegenen Gruppen von Verstärkungsteilen jeweils als Verstärkungs-Vorrichtungen (10) angeordnet sind, wobei die Volumenteile (V) entlang einer Längsrichtung (L-V) hintereinander angeordnet sind, wobei jede Gruppe eines Volumenteils (V) jeweils aus einer Kombination von zumindest zwei Verstärkungsteilen (10a, 10b, 10c, 10d; 10e, 10f) gebildet ist, deren Ausrichtungen jeweils maximal 30 Grad von der Dickenrichtung (D-B) der Beplankungsschale (B) abweichen und die in regelmäßiger oder unregelmäßiger Weise um eine Mittelachse des Volumenteils (V) herum angeordnet sind,
wobei vorzugsweise zumindest ein Teil der Verstärkungs-Vorrichtungen (10) aus Paaren von Verstärkungsteilen (10; 10a, 10b, 10c, 10d; 10e, 10f) gebildet sind, deren Verstärkungsteile in Richtung der Längserstreckung des äußeren Randabschnitts (60) der Beplankungsschale (B) gesehen paarweise X-förmige Orientierungen aufweisen,
wobei besonders bevorzugt zumindest ein Teil der Verstärkungs-Vorrichtungen (10) aus Paaren von Verstärkungsteilen (10; 10a, 10b, 10c, 10d; 10e, 10f) gebildet sind, deren Verstärkungsteile in Richtung der Längserstreckung des äu-ßeren Randabschnitts (60) der Beplankungsschale (B) gesehen paarweise X-förmige Orientierungen aufweisen, und eine Mehrzahl von Volumenteilen (V) mit einer Gruppe von Verstärkungsteilen (10; 10a, 10b, 10c, 10d; 10e, 10f) entlang zumindest eines Bereichs des äußeren Randabschnitts (60) hintereinander angeordnet ist.

11. Hauptlast-tragende Beplankungsschale (B) nach einem der Ansprüche 1 bis 10, **dadurch gekennzeichnet, dass** Verstärkungsteile (10a, 10b, 10c, 10d; 10e, 10f) zumindest teilweise pinförmig gestaltet sind,
wobei vorzugsweise ein Ende von Verstärkungsteilen jeweils mit einer fußartigen Verbreiterung versehen ist.

12. Hauptlast-tragende Beplankungsschale (B) nach einem der Ansprüche 1 bis 10, **dadurch gekennzeichnet, dass** Verstärkungsteile (10a, 10b, 10c, 10d; 10e, 10f) nadelförmig gestaltet sind.

13. Hauptlast-tragende Beplankungsschale (B) nach einem der Ansprüche 1 bis 10, **dadurch gekennzeichnet, dass** Verstärkungsteile (10a, 10b, 10c, 10d; 10e, 10f) einer Verstärkungs-vorrichtung (10) zumindest teilweise plattenförmig gestaltet sind,
wobei plattenförmige Verstärkungsteile einer Verstärkungs-Vorrichtung (10) vorzugsweise ineinander greifend angeordnet sind.

14. Hauptlast-tragende Beplankungsschale (B) nach einem der Ansprüche 1 bis 13, **dadurch gekennzeichnet, dass** die Schublast-aufnehmende Kernschicht (53) in dem Kernschicht-Endbereich (56) aus einem Schaum gebildet ist.

15. Strukturbauteil (1) eines Strömungskörpers mit zumindest einer Hauptlast-tragenden Beplankungsschale (B) nach einem der Ansprüche 1 bis 14 und einer Trägerstruktur (T) zur Befestigung der Beplankungsschale (B),
wobei vorzugsweise die Trägerstruktur (T) aus zumindest zwei jeweils entlang einer Längsrichtung (L-S) des Strukturbauteils (1) verlaufenden Trägerbauteilen (5, 6) und zumindest einer zwischen und quer zu diesen verlaufenden und entlang ihrer Längsrichtung (L-R) mit der Beplankungsschale (B) verbundenen Rippen-Anordnung (R) zur flächigen Abstützung der Beplankungsschale (B) an der Trägerstruktur (T) gebildet ist.

16. Strömungskörper mit einem Strukturbauteil und einer dieses zumindest bereichsweise ummantelnden Hauptlast-tragenden Beplankungsschale (B), wobei die Beplankungsschale (B) nach einem der Ansprüche 1 bis 14 ausgebildet ist.

## Claims

1. A main-load bearing skin shell (B) for a structural component (1) of a flow body, wherein the skin shell (B) is constructed as a sandwich and comprises an inner skin section (11, 31, 51), an outer skin section (12, 32, 52) and a shear-force-absorbing core layer (33) which is situated between said skin sections and which areally connects the inner and the outer skin section (11, 31, 51; 12, 32, 52), wherein in the skin shell (B) in the core layer several reinforcement devices (10; 10a, 10b, 10c, 10d; 10e, 10f) are integrated which in each case project through at least 85% of the shear-force-absorbing core layer (13) in their thickness direction in order to improve the crack resistance of the skin shell (B) and/or to achieve a limitation of existing or arising damage,
**characterized in that**
the shear-force-absorbing core layer (33) comprises several core layer sections (33a) that are arranged one beside the other in the longitudinal extension of the foam layer, which core layer sections in each case on the contacting sides are interconnected by a core layer reinforcement region (37) that extends across the longitudinal direction of the core layer (33) through said core layer, wherein the reinforcement region (37) comprises a material that provides at least twice the stiffness of the shear-force-absorbing core layer (33), and several reinforcement components (10; 10a, 10b, 10c, 10d; 10e, 10f) each at least partially project through the reinforcement region (37).

2. The main-load bearing skin shell (B) according to claim 1, **characterized in that** the core layer reinforcement region (37) is made of resin.

3. The main-load bearing skin shell (B) according to claim 1 or 2, **characterized in that** one end of reinforcement components (10; 10a, 10b, 10c, 10d; 10e, 10f) is inserted into the reinforcement region (37) while the remaining region extends into the shear-force-absorbing core layer (33).

4. The main-load bearing skin shell (B) according to any of claims 1 to 3, **characterized in that** along a surrounding region (Z) of a plurality of core layer reinforcement regions (37) in the shear-force-absorbing core layer (33) of the skin shell (B) reinforcement devices (10) are integrated.

5. The main-load bearing skin shell (B) according to claim 4, **characterized in that** the surrounding region (Z) for the arrangement of the reinforcement devices (10) on both sides of the core layer reinforcement region (37) extends up to a distance of a maximum of ten times the thickness of the skin shell (B) at the respective position of the core layer reinforcement region (37).

6. The main-load bearing skin shell (B) according to any of claims 1 to 5, **characterized in that** several rows of reinforcement components are arranged one behind the other in the longitudinal direction along a surrounding region (Z) of at least one core layer reinforcement region (37), wherein the rows of reinforcement components are arranged in such a manner that their reinforcement components mesh when viewed in the direction of the longitudinal extension of the outer edge section (60) of the skin shell (B).

7. The main-load bearing skin shell (B) according to any of claim 1 to 6, **characterized in that** the angle between the longitudinal direction of the respective reinforcement component and the thickness direction of the skin shell at this position is within a range of between 45 degrees and 10 degrees.

8. The main-load bearing skin shell (B) according to any of claim 1 to 7, **characterized in that** the inner skin section (11, 31, 51; 12) and/or the outer skin section (12, 32, 52) in each case comprises several skin layers.

9. The main-load bearing skin shell (B) according to any of claim 1 to 8, **characterized in that** at least part of the reinforcement devices (10; 10a, 10b, 10c, 10d; 10e, 10f) is arranged such that in each case their ends (F1) at least partially project through the inner skin section (11, 31, 51) and/or the outer skin section (12, 32, 52).

10. The main-load bearing skin shell (B) according to any of claim 1 to 9, **characterized in that** reinforcement components (10; 10a, 10b, 10c, 10d; 10e, 10f) in the skin shell (B) are in each case arranged as reinforcement devices (10) in groups of reinforcement components, wherein the groups are situated in a respective volume component (V) of the skin shell (B), wherein the volume components (V) are arranged one behind the other along a longitudinal direction (L-V), wherein each group of a volume component (V) in each case comprises a combination of at least two reinforcement components (10a, 10b, 10c, 10d; 10e, 10f) whose alignments in each case deviate by a maximum of 30 degrees from the thickness direction (D-B) of the skin shell (B), and which are arranged in a regular or irregular manner around a centre axis of the volume component (V),
wherein preferably at least part of the reinforcement devices (10) comprise pairs of reinforcement components (10; 10a, 10b, 10c, 10d; 10e, 10f) whose reinforcement components pairwise comprise X-shaped orientations when viewed in the direction of the longitudinal extension of the outer edge section (60) of the skin shell (B),
wherein it is particularly preferred that at least one part of the reinforcement devices (10) comprises pairs of reinforcement components (10; 10a, 10b, 10c, 10d; 10e, 10f), whose reinforcement components pairwise comprise X-shaped orientations when viewed in the direction of the longitudinal extension of the outer edge section (60) of the skin shell (B), and a plurality of volume components (V) with a group of reinforcement components (10; 10a, 10b, 10c, 10d; 10e, 10f) is arranged one behind the other along at least one region of the outer edge section (60).

11. The main-load bearing skin shell (B) according to any of claim 1 to 10, **characterized in that** reinforcement components (10a, 10b, 10c, 10d; 10e, 10f) at least in part are of a pin-shaped design,
wherein preferably one end of reinforcement components in each case comprises a foot-like widened part.

12. The main-load bearing skin shell (B) according to any of claim 1 to 10, **characterized in that** reinforcement components (10a, 10b, 10c, 10d; 10e, 10f) are of a needle-shaped design.

13. The main-load bearing skin shell (B) according to any of claim 1 to 10, **characterized in that** reinforcement components (10a, 10b, 10c, 10d; 10e, 10f) of a reinforcement device (10) are at least in part of a plate-shaped design, wherein plate-shaped reinforcement components of a reinforcement device (10) are preferably arranged so as to engage each other.

14. The main-load bearing skin shell (B) according to any of claim 1 to 13, **characterized in that** the shear-force-absorbing core layer (53) in the end region (56) of the core layer comprises a foam.

15. A structural component (1) of a flow body with at least one main-load bearing skin shell (B) according to any of claim 1 to 14 and a support structure (T) for the attachment of the skin shell (B),
wherein, preferably, the support structure (T) comprises at least two support components (5, 6), each extending along a longitudinal direction (L-S) of the structural component (1), and at least one rib arrangement (R), extending between and across said support components and connected along its longitudinal direction (L-R) to the skin shell (B), for areally supporting the skin shell (B) on the support structure (T).

16. A flow body with a structural component and a main-load bearing skin shell (B) which at least in some regions envelops said structural component, wherein the skin shell (B) is designed according to any of claim 1 to 14.

## Revendications

1. Coque de planchéiage qui porte la charge principale (B) pour un élément de structure (1) d'un corps d'écoulement, la coque de planchéiage (B) étant formée comme un sandwich et à partir d'une portion d'enveloppe intérieure (11, 31, 51), d'une portion d'enveloppe extérieure (12, 32, 52) ainsi que d'une couche centrale (33) située entre celles-ci, qui absorbe la charge de poussée, qui relie la portion d'enveloppe intérieure et la portion d'enveloppe extérieure (11, 31, 51 ; 12, 32, 52) l'une à l'autre par leur surface, cependant que plusieurs dispositifs de renforcement (10 ; 10a, 10b, 10c, 10d ; 10e, 10f) sont intégrés dans la coque de planchéiage (B) dans la couche centrale, dispositifs qui traversent respectivement au moins 85 % de la couche centrale qui absorbe la charge de poussée (13) dans le sens de son épaisseur pour améliorer la résistance à la fissuration de la coque de planchéiage (B) et/ou pour obtenir une réduction des dommages existants ou qui se forment,
**caractérisée en ce que**
la couche centrale qui absorbe la charge de poussée (33) est formée par plusieurs portions de couche centrale (33a), placées l'une à côté de l'autre dans l'extension longitudinale de la couche de mousse, qui sont reliées l'une à l'autre respectivement sur les côtés adjacents l'un à l'autre par une zone de renforcement de couche centrale (37) qui s'étend transversalement par rapport à l'extension longitudinale de la couche centrale (33) en la traversant, cependant que la zone de renforcement (37) est formée en un matériau qui présente une rigidité au moins du double de celle de la couche centrale qui absorbe la charge de poussée (33) et que plusieurs parties de renforcement (10 ; 10a, 10b, 10c, 10d ; 10e, 10f) traversent la zone de renforcement (37) respectivement au moins partiellement.

2. Coque de planchéiage qui porte la charge principale (B) selon la revendication 1,
**caractérisée en ce que** la zone de renforcement de la couche centrale (37) est formée en résine.

3. Coque de planchéiage qui porte la charge principale (B) selon la revendication 1 ou 2, **caractérisée en ce que** des parties de renforcement (10 ; 10a, 10b, 10c, 10d ; 10e, 10f) sont mises en place avec une extrémité dans la zone de renforcement (37) et s'étendent avec le reste de leur surface dans la couche centrale qui absorbe la charge de poussée (33).

4. Coque de planchéiage qui porte la charge principale (B) selon l'une des revendications 1 à 3, **caractérisée en ce que** des dispositifs de renforcement (10) sont intégrés dans la couche centrale qui absorbe la charge de poussée (33) de la coque de planchéiage (B) le long d'une zone environnante (Z) d'une multitude de zones de renforcement de la couche centrale (37).

5. Coque de planchéiage qui porte la charge principale (B) selon la revendication 4, **caractérisée en ce que** la zone environnante (Z) pour l'arrangement des dispositifs de renforcement (10) s'étend des deux côtés de la zone de renforcement de la couche centrale (37) jusqu'à une distance d'au maximum dix fois l'épaisseur de la coque de planchéiage (B) sur l'endroit respectif de la zone de renforcement de la couche centrale (37).

6. Coque de planchéiage qui porte la charge principale (B) selon l'une des revendications 1 à 5, **caractérisée en ce que** plusieurs rangées de parties de renforcement sont placées l'une derrière l'autre dans le sens longitudinal le long d'une zone environnante (Z) d'au moins une zone de renforcement de la couche centrale (37), cependant que les rangées de parties de renforcement sont placées de telle manière que leurs parties de renforcement se peignent l'une dans l'autre, ceci étant vu dans la direction de l'extension longitudinale de la portion marginale extérieure (60) de la coque de planchéiage (B).

7. Coque de planchéiage qui porte la charge principale (B) selon l'une des revendications 1 à 6, **caractérisée en ce que** l'angle entre le sens longitudinal de la partie de renforcement respective et le sens de l'épaisseur de la coque de planchéiage à cet endroit se situe au sein d'une plage entre 45 degrés et 10 degrés.

8. Coque de planchéiage qui porte la charge principale (B) selon l'une des revendications 1 à 7, **caractérisée en ce que** la portion d'enveloppe intérieure (11, 31, 51 ; 12) et/ou la portion d'enveloppe extérieure (12, 32, 52) est formée respectivement par plusieurs couches d'enveloppe.

9. Coque de planchéiage qui porte la charge principale (B) selon l'une des revendications 1 à 8, **caractérisée en ce qu'**au moins une partie des dispositifs de renforcement (10 ; 10a, 10b, 10c, 10d ; 10e, 10f) est placée de telle manière que leurs extrémités (F1) traversent la portion d'enveloppe intérieure (11, 31, 51) et/ou la portion d'enveloppe extérieure (12, 32, 52) respectivement au moins partiellement.

10. Coque de planchéiage qui porte la charge principale (B) selon l'une des revendications 1 à 9, **caractérisée en ce que** des parties de renforcement (10 ; 10a, 10b, 10c, 10d ; 10e, 10f) sont placées en tant que dispositifs de renforcement (10) dans la coque de planchéiage (B) dans des groupes de parties de renforcement situés respectivement dans une partie de volume (V) de la coque de planchéiage (B), cependant que les parties de volume (V) sont placées l'une derrière l'autre le long d'une direction longitudinale (L-V), cependant que chaque groupe d'une partie de volume (V) est formé respectivement par une combinaison d'au moins deux parties de renforcement (10a, 10b, 10c, 10d ; 10e, 10f) dont les orientations diffèrent respectivement de maximum 30 degrés du sens de l'épaisseur (D-B) de la coque de planchéiage (B) et qui sont placées de manière régulière ou irrégulière autour d'un axe central de la partie de volume (V),
cependant que de préférence au moins une partie des dispositifs de renforcement (10) est formée par des paires de parties de renforcement (10 ; 10a, 10b, 10c, 10d ; 10e, 10f) dont les parties de renforcement présentent des orientations par paires en forme de X, ceci étant vu dans le sens de l'extension longitudinale de la portion marginale extérieure (60) de la coque de planchéiage (B),
cependant que de manière particulièrement préférée au moins une partie des dispositifs de renforcement (10) est formée par des paires de parties de renforcement (10 ; 10a, 10b, 10c, 10d ; 10e, 10f) dont les parties de renforcement présentent des orientations par paires en forme de X, ceci étant vu dans le sens de l'extension longitudinale de la portion marginale extérieure (60) de la coque de planchéiage (B) et une multitude de parties de volume (V) est placée l'une derrière l'autre avec un groupe de parties de renforcement (10 ; 10a, 10b, 10c, 10d ; 10e, 10f) le long d'au moins une zone de la portion marginale extérieure (60).

11. Coque de planchéiage qui porte la charge principale (B) selon l'une des revendications 1 à 10, **caractérisée en ce que** des parties de renforcement (10a, 10b, 10c, 10d ; 10e, 10f) sont configurées au moins partiellement en forme de broches,
cependant que de préférence une extrémité de parties de renforcement est pourvue respectivement d'un élargissement de type pied.

12. Coque de planchéiage qui porte la charge principale (B) selon l'une des revendications 1 à 10, **caractérisée en ce que** des parties de renforcement (10a, 10b, 10c, 10d ; 10e, 10f) sont configurées en forme d'aiguilles.

13. Coque de planchéiage qui porte la charge principale (B) selon l'une des revendications 1 à 10, **caractérisée en ce que** des parties de renforcement (10a, 10b, 10c, 10d ; 10e, 10f) d'un dispositif de renforcement (10) sont configurées au moins partiellement en forme de plaques,
cependant que des parties de renforcement en forme de plaques d'un dispositif de renforcement (10) sont placées en étant de préférence engrenées l'une dans l'autre.

14. Coque de planchéiage qui porte la charge principale (B) selon l'une des revendications 1 à 13, **caractérisée en ce que** la couche centrale qui absorbe la charge de poussée (53) est formée en une mousse dans la zone d'extrémité de la couche centrale (56).

15. Elément de structure (1) d'un corps d'écoulement avec au moins une coque de planchéiage qui porte la charge principale (B) selon l'une des revendications 1 à 14 et une structure de support (T) pour la fixation de la coque de planchéiage (B),'
cependant que de préférence la structure de support (T) est formée par au moins deux composants de support (5, 6) situés respectivement le long d'une direction longitudinale (L-S) de l'élément de structure (1) et par au moins un arrangement de nervures (R) situé entre ceux-ci et transversalement par rapport à ceux-ci et relié à la coque de planchéiage (B) le long de sa direction longitudinale (L-R) pour l'appui en surface de la coque de planchéiage (B) sur la structure de support (T).

16. Corps d'écoulement avec un élément de structure et une coque de planchéiage qui porte la charge principale (B) qui enveloppe celui-ci au moins par sections, cependant que la coque de planchéiage (B) est configurée selon l'une des revendications 1 à 14.
